(19) Europäisches Patentamt
European Patent Office
Office européen des brevets

(11) **EP 3 036 929 B1**

(12) **EUROPEAN PATENT SPECIFICATION**

(45) Date of publication and mention of the grant of the patent:
**20.03.2019 Bulletin 2019/12**

(51) Int Cl.:
***H04W 24/00*** (2009.01)

(21) Application number: **14838317.7**

(86) International application number:
**PCT/US2014/052312**

(22) Date of filing: **22.08.2014**

(87) International publication number:
**WO 2015/027165 (26.02.2015 Gazette 2015/08)**

(54) **SYSTEM AND METHOD FOR COMMUNICATING INFORMATION IN A LOCATION-BASED SYSTEM**

SYSTEM UND VERFAHREN ZUR INFORMATIONSÜBERTRAGUNG IN EINEM ORTSBASIERTEN SYSTEM

SYSTÈME ET PROCÉDÉ DE COMMUNICATION D'INFORMATIONS DANS UN SYSTÈME BASÉ SUR LA LOCALISATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **23.08.2013 US 201313974708**

(43) Date of publication of application:
**29.06.2016 Bulletin 2016/26**

(73) Proprietor: **Foursquare Labs, Inc.**
**New York, NY 10012 (US)**

(72) Inventors:
• **SHAW, Blake**
**New York, NY 10014 (US)**
• **HOGUE, Andrew**
**Ho Ho Kus, NJ 07423 (US)**
• **SALINAS, Daniel**
**New York, NY 10012 (US)**
• **XIANG, Rongjing**
**New York, NY 10012 (US)**
• **LI, Tianhui**
**Brooklyn, NY 11201 (US)**
• **RANGANATH, Anoop**
**New York, NY 10003 (US)**
• **SINHA, Siddhartha**
**Brooklyn, NY 11211 (US)**
• **SHEA, Jon**
**Brooklyn**
**NY 11217 (US)**
• **DAVIS, Jackson**
**San Francisco, CA 94110 (US)**
• **WEISS, Noah**
**New York, NY 10011 (US)**
• **LISZKA, Jason**
**New York, NY 10016 (US)**
• **JULIEN, Timothy**
**New York, NY 10009 (US)**
• **WYSZOMIERSKI, Mark**
**Manhasset, NY 11030 (US)**
• **CROWLEY, Dennis**
**New York, NY 10009 (US)**
• **HAYES, Patrick**
**New York, NY 10009 (US)**
• **BABLON, Geoffroy**
**New York, NY 10016 (US)**
• **QUINN, Siobhan**
**San Francisco, CA 94109 (US)**

(74) Representative: **Grünecker Patent- und Rechtsanwälte**
**PartG mbB**
**Leopoldstraße 4**
**80802 München (DE)**

(56) References cited:
EP-A1- 2 613 501     WO-A1-2013/062564
US-A1- 2006 236 258     US-A1- 2007 006 098
US-A1- 2010 190 513     US-A1- 2010 331 016
US-A1- 2011 276 565     US-A1- 2012 158 472
US-A1- 2013 196 690     US-B2- 8 214 738

**EP 3 036 929 B1**

**Description**

There are many location-based systems in use today. In particular, location-based services such as the Foursquare system (available on the Internet at http://www.foursquare.com) permit users to verify their locations using one or more computer systems. Some services permit users to use their locations for the purpose of interacting within a social network. For instance, within one type of location-based social network, users are permitted to perform a "check-in" to particular locations, including venues such as businesses, retail locations, points of interest, or other locations. Λ check-in generally includes a process that identifies a user with a particular venue location at a given time, and such check-ins may be recorded over time (e.g., by a location-based social network). Such location-based social networks also permit users to interact with friends, find venues of interest, leave comments regarding particular venues, among other functions.

US 2007/006098 A1 relates to the integration of location logs, GPS signals, and spatial resources for identifying user activities, goals, and context. A location component is provided that determines location data of a wireless communications device of a user. A context component is provided that accesses context data based on the location data to define a context in which the device is located. Activities, goals, and overall context of a user can be inferred through statistical fusion of multiple sources of evidence. The context data is presented to the user via the wireless device, such that the user can make decisions as to where to go, for example. User preferences can be accessed and applied to filter context data according to what the user desires to see and access.

US 2006/236258 A1 relates to the scheduling of rendering of location-based content. Tickers are populated with location-based information that is selected according to the geographic location of communication devices and is scheduled for display on the tickers according to specified criteria. Location-appropriate content is obtained either in real-time from the network or from a local data store at the communication device. Selected content is displayed according to the occurrence of a triggering event or based on a schedule that uses a score assigned to the content. In general location-based, context-aware content can be displayed on tickers associated with a variety of communication devices, including mobile communication devices and "immobile" or stationary personal computers.

EP 2 613 501 A1 relates to location-based social software for mobile devices.

US 2011/276565 A1 relates to collaborative location and activity recommendations.

SUMMARY

It is the object of the present invention to provide an improved method for presenting information to a user in a computer system.

This object is solved by the subject matter of the independent claim.

Preferred embodiments are defined by the dependent claims.

There are problems with existing systems that provide content to users. For instance, existing systems often require users to explicitly search for local content of interest. However, this requires the user to fully understand when particular searches would be most interesting. According to some aspects of the present invention, a system and method is provided that preemptively searches for content on the user's behalf and presents the most interesting content to the user. For instance, it would be beneficial to provide a mobile system that presents interesting local content to users at times when the content is most actionable and engaging without the user explicitly entering a search term or expressing intent.

However, it is appreciated that often there is a large amount of local content one could choose to display to a user at any given time, such as nearby tips, trending places or venues, recommendations, new and notable places, nearby friends, tourist sites, among other information. It is often difficult to determine which content would be most interesting to the user. Aspects of the present invention relates to using contextual signals about a user to rank local content. Signals may include, for example, who they (one or more users) are, what kinds of places they like, where they are, how familiar they are with the area, the time of day, where the user's friends have been nearby, among other information related to the one or more users. In one embodiment, a system may be provided that uses contextual rules and machine learning to target content to users. The system learns which of these contextual signals are most important and alters its ranking function to optimize user engagement in terms of conversions. Conversions in this context may be, for example, actions performed by the user such as the user selecting a piece of content, opening a push notification, or physically going to the location mentioned in the content soon after.

According to one embodiment, it is appreciated that it would be useful to target particular users when they arrive at a particular venue. According to one embodiment, a process may be provided to pinpoint an actual moment of arrival at a specific venue. It is appreciated that determining an appropriate arrival time to a venue is an opportune moment for delivering contextual content. To this end, statistical models trained on actual check-in data may be used to predict when a user is actually at a particular location. Typical location-based systems rely on noisy GPS signals and/or conventional outlines of buildings to determine whether a user is located at a particular location. Rather, by using information by the users themselves of where their location is relevant to a meaningful location, a more accurate model may be developed and used by a location-based service for delivering information.

In one implementation, a model that is trained on check-in data to determine the correct venue when a user has arrived at a particular venue may be used to trigger a context change. Such a change in context may trigger a delivery of information to the user (e.g., via their mobile device). For instance, when a user arrives at a venue where the user has never been, the location-based service may determine this location change to determine the user is located at the venue, and along with the knowledge that the user has not previously been at the venue, the location-based service sends the mobile device a notification of the three most popular items on the menu. In another example, when a user arrives at a place where one of their friends left a tip, the location-based service sends the user a notification including the "tip" information left by the friend. There are many implementations where delivery of contextual information to a user on arrival may be beneficial.

According to one embodiment, a mobile application is provided that has a series of interfaces in which is displayed contextual content to the user. For instance, small interfaces associated with certain targeted content are shown to the user within the mobile application interface. For instance, small interfaces contacting contextual content may be displayed as "cards" within the interface. In one embodiment, such cards may be displayed under a map that shows the user's location. In another example, such contextual information may be sent to users outside of the mobile application as the user and his/her mobile device is located in different areas. Such messages may be sent to the user's mobile device as push notifications.

For example, when a location-based system of a location-based service detects that a user has just arrived in a city which he/she is unfamiliar with, the system creates a "tourist spots" card, which uses a retrieval and ranking algorithm to find places nearby that are interesting to travelers. Casual users might not even be aware that this would be a useful search to perform, but often find the content engaging when the information is automatically presented to them. According to one aspect, a system is provided that uses advanced contextual signals such as "familiarity with the area", social signals, the user's last check-in, as well as others. Classifying a user's familiarity with the area or locale may provide a good contextual signal of what types of information should be delivered to the user (e.g., upon arrival to a venue, city, neighborhood, region or other location).

According to one embodiment, a location-based service provides one or more contextual based content responses based on a request generated by a user (e.g., by a mobile device). In one implementation, a request primarily includes a user identification (e.g., a user ID), a location of the user (e.g., in a latitude/longitude format), and a time at which the measurement was taken (e.g., in a timestamp format). The location-based system then accesses a variety of user-keyed and geo-keyed databases to construct contextual information based on the location that the location-based service perceives the user is located. For instance, such contextual information that can be generated may include the name of the city the user is in, how often the user has been there, how far would a typical user travel from their current location to go somewhere next, etc. The location-based system then evaluates a set of modules, each designed to generate content around a specific vertical (friends, tips, sights, recommendations, trending places, etc). Each module has its own set of rules defining under which contexts each module should "trigger." For example, a "new and notable module" may only be presented to users who are familiar with the region they are in. Each module's content output is then evaluated by a ranking algorithm, which then selects a limited number of pieces of content which are predicted to be most engaging to the user. These pieces of content are then delivered to the user as "cards" which are presented at the top of the app, or messages such as push notifications sent to the user.

According to another aspect of the present invention, a method is provided for periodically delivering content to the user while minimizing processing and battery life impact on a mobile device. For instance, in a device such as a mobile phone that is configured to receive notifications, processes that provide notifications commonly drain battery life during their execution. In one aspect, a process is provided that tracks user movement periodically, and delivers content when a contextual change has occurred, thus minimizing the impact on the mobile device. One aspect of the invention relates to pinpointing an actual moment of arrival at a specific venue. It is appreciated that there may be a high amount of "noise" as a user moves to different locations, and such noise may not necessarily result in an actual context change. One aspect relates to being able to accurately determine when the arrival event occurs, so that contextual content may be delivered at that time. If there is no contextual change, resources can be preserved during the period where the user is not moving, or his/her movement does not result in a context change.

According to another aspect of the present invention, it is realized that there is a problem of mapping a noisy estimate of a user's current location to a semantically meaningful point of interest such as a home, restaurant or store. Despite the poor accuracy of GPS on current mobile devices and the high density of locations in urban areas, it is possible to accurately predict the user's location. According to one embodiment, a location-based system may implement a modeling of places (e.g., venues) and users. In one embodiment, a user's location may be inferred by using aggregate signals based on a collection of users' check-in data. That is, by using check-in data which ties many users' locations with semantically meaningful locations, a model can be constructed that allows a user to be "placed" in such semantically meaningful locations. To this end, a system may be provided that uses machine learning techniques to create a model that can map a user's location to semantically meaningful locations. For instance, such a model may be trained using check-in data (e.g., such as check-in data maintained in one or more location-based services such as the well-known Foursquare service provided by Foursquare Labs, Inc.). Such training data used to train a model may include, for example, distance, time, point of interest popularity, user history, among other information maintained within a location-based service.

If a context change is not determined, according to one embodiment, the process may transition into a wait or sleep mode between periodic tracking. Length of the tracking may be determined as a function of time of day, recent movement, historical performance, or other information. Further, a geofence may be constructed when the user is stationary, and movement of the user outside of the geofence may be monitored to determine a "check-out" of a particular venue. Such processes may be combined with any of the contextual determinations herein to create an efficient system for notifying users of contextual local content.

Another aspect of the present invention relates to identifying semantically meaningful passive triggers, such as entering neighborhoods or cities, and stopping at venues. Most existing techniques trigger notifications only on a significant location change in the GPS coordinates of a user, which can often in practice feel less tied to real-world actions. One aspect of the present invention relates to measuring as precisely as possible when a user has entered and stopped at a specific venue, making the contextual information the user receives seem more relevant and tied to the user's movement.

One aspect of the invention includes a server-side and client-side component. Both the server and client maintain an exponentially smoothed estimate of the location and speed of the user as well as a history of recent locations. This data can then be used to determine if the client (e.g., a mobile phone) crosses city or neighborhood boundaries, or slows down and stops at a particular venue. When the system detects that one of these passive triggers events has occurred, the system then searches for interesting nearby content, and possibly sends a notification to the user. After the user has stopped, the system may set up a geofence around the user to allow the mobile clients to use less power while the user is stationary.

According to some aspects of the present invention, systems and methods are provided that permit merchants, venue owners, and other entities defined within a location-based system to create content and communicate that content with users. For instance, within traditional location-based networks, users "check-in" to venues and are permitted to search for venues, specials, and other information. However, it would be useful to have additional communication capabilities that permit merchants and other entities to engage users in different ways.

In one embodiment, one or more advertisers, merchants or other entities may be able to send messages to one or more users. For instance, if a user visits a venue more than a certain number of times in total, visits or "checks-in" to that venue over a period of time, indicates that the user follows or "likes" a particular venue or merchant, or performs some other activity with the location-based network, that merchant may be provided a vehicle for sending messages to those users. For instance, it may be beneficial to offer promotions, send advertising messages, or otherwise engage users based on their activity in a location-based system.

To this end, a system may be provided that permits advertisers and other providers to create messages that are delivered to a user based on their activity with a location-based system. In one embodiment, a user may be indicated as one that receives certain types of messages when that user interacts with a particular venue location and/or merchant. For instance, if that user has checked in to a particular venue X number of times, an indication may be set in the location-based system that permits the venue location owner to target messages to that user. In another example, messages may be sent to a user that merely has an association with the merchant.

In one embodiment, it is appreciated that a user may interact with many venues, all capable of targeting messages to the user. Therefore, according to one embodiment, it may be beneficial to enable the messages to be delivered to the user selectively based upon the user's location. So, for instance, if the user is located in San Francisco, but "likes" a coffee shop in Seattle, the user will not be targeted for any communications while the user is not located near the coffee shop in Seattle. In one example, if the user is located within a particular city, town, or other defined area (e.g., a state serviced by the merchant), then the user may be targeted for particular messages from a particular merchant if the user has made the defined activity level with that venue or merchant.

According to one embodiment, the messaging does not require the permission to opt-in or otherwise authorize the communication of messages, but rather the user's activity with the merchant or venue within the location-based system that causes the messaging to occur. Having the capability to target users based on location (e.g., What users are located near my venue?) allows merchants to more access, in a more focused manner, the users that are capable of performing purchases.

In another embodiment, the user need not be located within a particular region to receive messages from a merchant. Rather, the user may be sent any message type by the merchant if that user achieved the particular status or activity level within the location-based system. For instance, if the user checks in to a particular venue location a prescribed number of times, that user can receive messages from the merchant.

According to one embodiment, a location-based system may use one or more signals to determine the strength of a relationship between two or more entities to determine whether a communication should occur between those entities. For instance, the location-based system may observer behavior of the user (e.g., over a period of time), and when the user has achieved a certain level of contact with a venue, a communication path may be established between the user and the venue is established by the location-based system. Thus, according to one aspect, strength of location-based system signals may be used to determine the probability of a message. This functionality contrasts with typical opt-in users that require a single action to opt-in by the users themselves (e.g., a "Follow" on Twitter) in that the connection is performed by the location-based system, and the connection may be based on a group of activities and not a single user-defined action.

In one embodiment, a number of different capabilities may be provided to a merchant to selectively communicate messages. For instance, in the case of multiple stores or a chain, a capability may be provided to selectively target a group of users associated with specific stores, groups of stores with a region, or an entire chain of stores (or other venue type). For example, with a chain of venues (e.g., stores), capability may be provided to allow the merchant to send updates regarding all venues in the chain or an arbitrary subset of venues within the chain.

In another example implementation according to various embodiments, user capability (e.g., to a merchant) may be provided that allows for delegated management at venues within a chain. In an example case, someone at National Coffee's corporate headquarters manages all the venues in the National Coffee chain, and therefore, can send messages to customers near any of those venues in the National Coffee chain. According to one embodiment, delegated management capability is provided that permits a manager to delegate access to other people (e.g., submanagers) who manage individual venues (or an arbitrary set of venues). These submanagers, who only manage a subset of the National Coffee venues, are permitted only to send updates to customers near the specific venues they manage. This means that the manager of National Coffee at 6th and 14th could send updates as National Coffee to any customers of national coffee, so long as they are currently located near the 6th and 14th venue. One additional benefit is that those customers may be patrons of another National Coffee and may have never visited the branch at 6th and 14th, but this manager can reach the customers directly since the users are located near his/her specific venue.

In another embodiment, capabilities are provide to engage users that are online, mobile, or in the venue location. For instance, when just online, users may be provided a control that associates them with the venue or merchant (e.g., a "like" control or other control type that associates a venue, product, manufacturer or content with the user). When mobile, certain venues or merchants may be saved for later access. When at or near the venue location, the user can "check-in" to the venue within a location-based application. Thus, conversion and/or targeting of users at different points is a useful capability to increase conversions.

Aspects of the present invention relate generally to advertising and specials. In one aspect, a location-based system may be provided that allows users to locate one or more venues based on location, as well as other information (e.g., recommendations by others, where people having similar tastes have been, what is popular, etc.). In one embodiment, such advertising and/or specials may be displayed to a user operating a mobile device, such as a cell phone. The mobile device may request (e.g., from a server), a list of recommendations in one or more categories based on the device's location.

Further, a facility may be provided for merchants, venue owners, and other entities to broadcast messages to particular users. For instance, based on a location of a user within the location-based system, the user may be sent one or more broadcast messages. For example, in one implementation, a user having a device within a certain distance radius of a venue may be targeted for a particular broadcast message. Such messages may include general communications, advertisements, specials, offers, or other information capable of being communicated through a location-based network. Such messages may be communicated in a mobile application, such as a location-based service application. In some instances, merchants may want to proactively communicate with users when the user has not opened the mobile application. According to one embodiment, the location-based service executes a background process that provides messaging functions when the application is not operating. In such a case, a user may be alerted of a message in an interface (e.g., of a mobile phone) when the user enters a geographic area with which a message is associated.

According to one embodiment, information associated with the user is used to determine whether a message is targeted to the user. In one example, venue locations where the user has previously visited may influence what messages may be sent to that user. For instance, a location-based service may store information for each particular user, including preference information identifying preferences of particular venues the user has visited (e.g., "tips"). Further, the location-based service may store preferences for venues that the user has not yet visited (e.g., "to do" information).

In another embodiment, information associated with other users in the location-based system may be used to determine whether a message is targeted to the user. For instance, for users that are the current users "friends," information regarding what venues those users have visited, their preferences for particular venues, and preferences for venues that they have not visited may be used to influence what messages may be displayed to the current user. Other users not in the current user's network may also be used to determine what messages are displayed. For instance, particular messages may be determined as more popular and/or have higher quality ratings as determined by other users, specific groups of users, or the entire network itself.

As discussed, tools may be provided to merchants to communicate messages to users of the location-based service. Further, additional tools may be provided to promote items within the location-based service. Such items may be displayed more prominently within lists (e.g., of recommendations), appear within certain areas of a location-based service application interface (e.g., near a top portion of the interface), be displayed as notifications both within the application and as a notification when the application is not active, and be displayed responsive to certain user actions (e.g., after a check-in, opening the application, performing a search, etc.), among other display methods. Items that can be "promoted" include venues, advertisements, specials, offers, messages as discussed above, or any other item within the location-based service.

According to one embodiment, a search engine associated with a location-based service may provide information based on one or more inputs provided by a user (e.g., via an interface of a mobile device). For instance, a user may be located at a particular location and that user decides he/she would like to purchase food. That user may also provide more specific information (e.g., the keyword "thai") although the user could be less specific and just specify a category such as "food." In one implementation, the user may select a control on the mobile device (e.g., a button) that specifies the category "food" or lists a number of categories of interest (e.g., in a menu structure). In the example above, the user may not want to travel past a certain distance, so the interface may permit the user to enter a distance limitation to the search along with the user's current location. The search engine may use any parameters provided by the user and the system (e.g., location of the user in latitude/longitude, altitude, etc.) to determine a list of venues to recommend to a user. Further, based on these user inputs, searches, venue choices or other activities within the location-based service, one or more messages may be displayed to the user.

According to another aspect of the present invention, a location-based system may use an adjustable boundary of a geographical area in which to trigger a display of messages to a particular user responsive to an action performed by a user in a location-based service. In one embodiment, the geographic area may be determined by a user (e.g., located within 1 mile of a particular venue, within the San Francisco area, within 200 feet of any store of the chain, etc.). According to one embodiment, the boundary of search may be adjusted based on the density of venues within a particular area. For instance, from a particular geographic point, a radius from the geographic point may be adjusted to achieve a particular venue density within a circular area. The boundary can be adjusted based on other criteria, such as a determination of how far other users have tended to travel from the point the current user is located when the a query was made. Although a circle may be used as a boundary, other boundary types and shapes may be used (e.g., square, rectangle, displayed map area, town, or similar boundary). Also, as discussed above, "noisy" location signals may be used as an input to a trained model to infer when a user is located at a particular location, including a city, town, neighborhood, venue or other location of interest.

According to one aspect, a method for presenting information to a user in a computer system is provided. The method comprises acts of determining an identity of the user in the system; determining, for the user, the location of a mobile device of the user; periodically determining a context of the user, and responsive to the determination of the context, determining contextual content to display to the user; and displaying the contextual content to the user in a display of the mobile device. In one embodiment, the method further comprises an act of determining movement of the mobile device of the user. In one embodiment, the method further comprises an act of determining whether there is a context change of the user responsive to movement of the mobile device of the user. In one embodiment, the method further comprises an act of logging a historical display of contextual information to the user in the display of the mobile device. In one embodiment, the method further comprises an act of logging a historical selection of contextual information by the user in the display of the mobile device. In one embodiment, the method further comprises an act of determining, by a plurality of modules each associated with a designated content type, contextual content for display to the user. In one embodiment, the method further comprises an act of ranking the respective contextual content of the plurality of modules. In one embodiment, the method further comprises an act of displaying the highest ranked contextual content to the user in the display of the mobile device. In one embodiment, the act of displaying the highest ranked contextual content to the user in the display of the mobile device includes displaying the contextual content in at least one of a stream of content within a location-based service application and a notification pushed to the mobile device. In one embodiment, the method further comprises an act of determining the context change of the user based on an arrival of the user at a venue. In one embodiment, the method further comprises an act of determining the arrival of the user at the venue by a model based on previous check-in data. In one embodiment, the method further comprises an act of determining a confidence score indicating that the user is likely located at the venue, and wherein the act of determining the context includes an act of determining that the user is located at the venue responsive to the confidence score. In one embodiment, the method further comprises an act of determining a time of delivery of contextual information coincident with a determined arrival time of the user at the venue.

According to one aspect, a method for presenting information to a user by a computer system is provided. The method comprises acts of determining, by a mobile device of the user, a change in context; requesting, by the mobile device responsive to a change in context, contextual information for display to the user; receiving the contextual information; and displaying the contextual information to the user in the display of the mobile device. In one embodiment, the method further comprises an act of performing, by the mobile device, a sleep operation until a change in context of the user. In one embodiment, the method further comprises an act of logging a historical display of contextual information to the user in the display of the mobile device. In one embodiment, the method further comprises an act of logging a historical selection of contextual information by the user in the display of the mobile device.

In one embodiment, the method further comprises an act of determining a classification of a context of a user. In one embodiment, the classification includes at least one of a group comprising a familiarity of the user to a locale in which the mobile device is located and an arrival classification of the mobile device to the locale. In one embodiment, the method further comprises an act of ranking the contextual information. In one embodiment, the act of ranking further comprises an act of determining an expected clickthrough rate for the contextual information. In one embodiment, the method further comprises an act of determining a plurality of expected clickthrough rates for the contextual information based on different user contexts. In one embodiment, the method further comprises an act of determining, by a mobile device of the user, whether the change in context is of a significant level to warrant a display of contextual content.

In one embodiment, the method further comprises an act of displaying the highest ranked contextual content to the user in the display of the mobile device. In one embodiment, the act of displaying the highest ranked contextual content to the user in the display of the mobile device includes displaying the contextual content in at least one of a stream of content within a location-based service application and a notification pushed to the mobile device. In one embodiment, the method further comprises an act of logging, by the computer system, impressions of the displaying the contextual information to the user on the mobile device.

In one embodiment, the method further comprises an act of logging, by the computer system, conversions of the contextual information to the user on the mobile device. In one embodiment, the act of logging conversions includes counting selections of the displayed contextual information by the user within the interface of the mobile device. In one embodiment, the locale includes at least one of a group comprising a venue, a neighborhood, a city, and area, and a location. In one embodiment, the method further comprises an act of determining the context change of the user based on an arrival of the user at a venue. In one embodiment, the method further comprises an act of determining the arrival of the user at the venue by a model based on previous check-in data. In one embodiment, the method further comprises an act of determining a time of delivery of the contextual information coincident with a determined arrival time of the user at the venue.

According to one aspect, a method for determining a semantically meaningful location of a mobile device is provided. The method comprises acts of determining, for a plurality of mobile devices, a plurality of measured locations of the respective plurality of mobile devices; determining, based on user input, a plurality of mappings of semantically meaningful locations to respective measured locations of the plurality of mobile devices; and determining, in another measurement, a new measured location for at least one of the plurality of mobile devices; and determining a semantically meaningful location of the at least one of the plurality of mobile devices based on the new measurement and a model based on the plurality of mappings of semantically meaningful locations to respective measured locations of the plurality of mobile devices.

In one embodiment, the method further comprises acts of determining and communicating contextual information to a user of the at least one of the plurality of mobile devices responsive to the act of determining the semantically meaningful location of the at least one of the plurality of mobile devices. In one embodiment, the act of determining, based on user input, a plurality of mappings of semantically meaningful locations to respective measured locations of the plurality of mobile devices further comprises an act of performing check-ins within a location-based service. In one embodiment, the model based on the plurality of mappings of semantically meaningful locations to respective measured locations of the plurality of mobile devices includes information based on the time of the mappings, and wherein the act of determining the semantically meaningful location of the at least one of the plurality of mobile devices is responsive to a measured timestamp associated with the new measured location for the at least one of the plurality of mobile devices.

In one embodiment, the model based on the plurality of mappings of semantically meaningful locations to respective measured locations of the plurality of mobile devices includes information based on a plurality of user identifications associated with each of the respective mappings, and wherein the act of determining the semantically meaningful location of the at least one of the plurality of mobile devices is responsive to a user identification of a user associated with the at least one of the plurality of mobile devices. In one embodiment, the method further comprises an act of determining a context change of the at least one of the plurality of mobile devices responsive to the act of determining the semantically meaningful location of the at least one of the plurality of mobile devices based on the new measurement and a model based on the plurality of mappings of semantically meaningful locations to respective measured locations of the plurality of mobile devices.

According to one aspect, a distributed system for presenting information to a user is provided. The system comprises a component configured to determine an identity of the user; a component configured to determine, for the user, the location of a mobile device of the user; a component configured to periodically determine a context of the user, and responsive to the determination of the context, determining contextual content to display to the user; and a component configured to transmit the contextual content to the user for display of the mobile device. In one embodiment, the system further comprises a component configured to determine movement of the mobile device of the user. In one embodiment, the system further comprises a component configured to determine whether there is a context change of the user responsive to movement of the mobile device of the user.

In one embodiment, the system further comprises a component configured to log a historical display of contextual information to the user in the display of the mobile device. In one embodiment, the system further comprises a component configured to log a historical selection of contextual information by the user in the display of the mobile device. In one embodiment, the system further comprises a plurality of modules each associated with a designated content type, each being configured to determine contextual content for display to the user. In one embodiment, the system further comprises a component configured to rank the respective contextual content of the plurality of modules. In one embodiment, the system further comprises a component configured to display the highest ranked contextual content to the user in the display of the mobile device. In one embodiment, the system further comprises a component configured to display the contextual content in at least one of a stream of content within a location-based service application and a notification pushed to the mobile device. In one embodiment, the system further comprises a component configured to determine the context change of the user based on an arrival of the user at a venue. In one embodiment, the system further comprises a component configured to determine the arrival of the user at the venue by a model based on previous check-in data. In one embodiment, the system further comprises a component configured to determine a confidence score indicating that the user is likely located at the venue, and a component configured to determine that the user is located at the venue responsive to the confidence score. In one embodiment, the system further comprises a component configured to determine a time of delivery of contextual information coincident with a determined arrival time of the user at the venue.

According to one aspect, a system for presenting information to a user by a computer system is provided. The system comprises a component configured to determine, by a mobile device of the user, a change in context; a component configured to request, by the mobile device responsive to a change in context, contextual information for display to the user; and a component configured to transmit the contextual information to a mobile device for display of the contextual information to the user. In one embodiment, the system further comprises a component configured to perform, by the mobile device, a sleep operation until a change in context of the user. In one embodiment, the system further comprises a component configured to log a historical display of contextual information to the user in the display of the mobile device.

In one embodiment, the system further comprises a component configured to log a historical selection of contextual information by the user in the display of the mobile device. In one embodiment, the system further comprises a component configured to determine a classification of a context of a user. In one embodiment, the classification includes at least one of a group comprising a familiarity of the user to a locale in which the mobile device is located and an arrival classification of the mobile device to the locale. In one embodiment, the system further comprises a component configured to rank the contextual information. In one embodiment, the system further comprises a component configured to determine an expected clickthrough rate for the contextual information. In one embodiment, the system further comprises a component configured to determine a plurality of expected clickthrough rates for the contextual information based on different user contexts. In one embodiment, the system further comprises a component configured to determine, by a mobile device of the user, whether the change in context is of a significant level to warrant a display of contextual content.

In one embodiment, the system further comprises a component configured to display the highest ranked contextual content to the user in the display of the mobile device. In one embodiment, the system further comprises a component configured to display the contextual content in at least one of a stream of content within a location-based service application and a notification pushed to the mobile device. In one embodiment, the system further comprises a component configured to log, by the computer system, impressions of the displaying the contextual information to the user on the mobile device. In one embodiment, the system further comprises a component configured to log, by the computer system, conversions of the contextual information to the user on the mobile device. In one embodiment, the system further comprises a component configured to count selections of the displayed contextual information by the user within the interface of the mobile device. In one embodiment, the locale includes at least one of a group comprising a venue, a neighborhood, a city, and area, and a location. In one embodiment, the system further comprises a component configured to determine the context change of the user based on an arrival of the user at a venue. In one embodiment, the system further comprises a component configured to determine the arrival of the user at the venue by a model based on previous check-in data. In one embodiment, the system further comprises a component configured to determine a time of delivery of the contextual information coincident with a determined arrival time of the user at the venue.

According to one aspect, a system for determining a semantically meaningful location of a mobile device is provided. The method comprises acts of a component configured to determine, for a plurality of mobile devices, a plurality of measured locations of the respective plurality of mobile devices; a component configured to determine, based on user input, a plurality of mappings of semantically meaningful locations to respective measured locations of the plurality of mobile devices; and a component configured to determine, in another measurement, a new measured location for at least one of the plurality of mobile devices; and a component configured to determine a semantically meaningful location of the at least one of the plurality of mobile devices based on the new measurement and a model based on the plurality of mappings of semantically meaningful locations to respective measured locations of the plurality of mobile devices. In one embodiment, the system further comprises a component configured to determine and communicate contextual information to a user of the at least one of the plurality of mobile devices responsive to determining the semantically meaningful location of the at least one of the plurality of mobile devices.

In one embodiment, the a component configured to determine, based on user input, a plurality of mappings of semantically meaningful locations to respective measured locations of the plurality of mobile devices is responsive to a component configured to record check-in information within a location-based service. In one embodiment, the model based on the plurality of mappings of semantically meaningful locations to respective measured locations of the plurality of mobile devices includes information based on the time of the mappings, and wherein the component configured to determine the semantically meaningful location of the at least one of the plurality of mobile devices is responsive to a measured timestamp associated with the new measured location for the at least one of the plurality of mobile devices. In one embodiment, the model based on the plurality of mappings of semantically meaningful locations to respective measured locations of the plurality of mobile devices includes information based on a plurality of user identifications associated with each of the respective mappings, and wherein the component configured to determine the semantically meaningful location of the at least one of the plurality of mobile devices is responsive to a user identification of a user associated with the at least one of the plurality of mobile devices. In one embodiment, the system further comprises a component configured to determine a context change of the at least one of the plurality of mobile devices responsive to determining the semantically meaningful location of the at least one of the plurality of mobile devices based on the new measurement and a model based on the plurality of mappings of semantically meaningful locations to respective measured locations of the plurality of mobile devices.

Still other aspects, examples, and advantages of these exemplary aspects and examples, are discussed in detail below. Moreover, it is to be understood that both the foregoing information and the following detailed description are merely illustrative examples of various aspects and examples, and are intended to provide an overview or framework for understanding the nature and character of the claimed aspects and examples. Any example disclosed herein may be combined with any other example in any manner consistent with at least one of the objects, aims, and needs disclosed herein, and references to "an example," "some examples," "an alternate example," "various examples," "one example," "at least one example," " this and other examples" or the like are not necessarily mutually exclusive and are intended to indicate that a particular feature, structure, or characteristic described in connection with the example may be included in at least one example. The appearances of such terms herein are not necessarily all referring to the same example.

Brief Description of the Drawings

Various aspects of at least one example are discussed below with reference to the accompanying figures, which are not intended to be drawn to scale. The figures are included to provide an illustration and a further understanding of the various aspects and examples, and are incorporated in and constitute a part of this specification, but are not intended as a definition of the limits of a particular example. The drawings, together with the remainder of the specification, serve to explain principles and operations of the described and claimed aspects and examples. In the figures, each identical or nearly identical component that is illustrated in various figures is represented by a like numeral. For purposes of clarity, not every component may be labeled in every figure. In the figures:

Figure 1 is a block diagram showing a location-based service and system suitable for incorporating various aspects of the present invention;

Figure 2 shows a block diagram of a distributed system suitable for performing various aspects of the present invention;

Figures 3A-3B are block diagrams showing example processes for targeting messages from a merchant in a system that uses location-based services;

Figure 3C shows a block diagram of an architecture for performing a query in a location-based service according to one embodiment of the present invention;

Figure 4 shows a block diagram of a process for processing information by a location-based service according to one embodiment of the present invention;

Figure 5 shows a block diagram of an example categorization of users by a location-based service according to one embodiment of the present invention;

Figure 6 shows a block diagram of an example process for delivering content to a mobile device according to one embodiment of the present invention;

Figure 7 shows a block diagram of another example process for delivering content to a mobile device according to one embodiment of the present invention;

Figure 8 shows an example interface associated with contextual content that may be communicated in a location-based service according to one embodiment of the present invention;

Figure 9 shows an example interface according to various embodiments of the present invention;

Figure 10 shows another example interface according to ne embodiment of the present invention;

Figure 11 shows a collection of example interfaces according to another embodiment of the present invention;

Figure 12 shows an example computer system with which various aspects of the invention may be practiced; and

Figure 13 shows an example storage system capable of implementing various aspects of the present invention.

Detailed Description

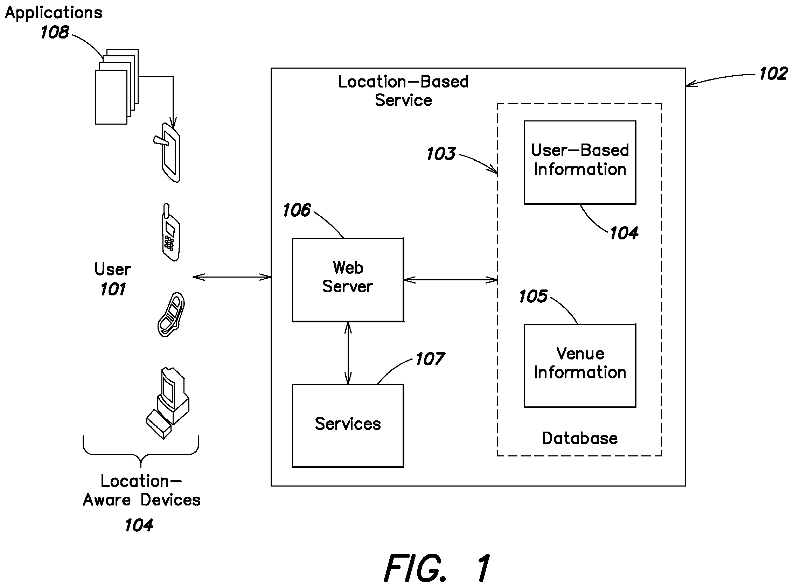

As discussed, aspects of the present invention relate to providing targeted contextual information to the user by a location-based service and its associated systems. Figure 1 shows a block diagram of a location-based service and system suitable for incorporating various aspects of the present invention. For instance, a location-based service 102 may permit one or more users (e.g., user 101) to interact with one or more other users, systems and services based on their location. To this end, the user's location may be determined using one or more location-aware devices (e.g., devices 104), such as, for example, a cell phone, smart phone, PDA, tablet computer, laptop or other system, The location-based service may provide one or more contextual-based content to the user based on their location, among other information. Further, as discussed above, the location-based service may also provide the ability for merchants to target users based upon their activities within the location-based service and to deliver content based on their context.

Users may use an interface of the location-aware device for interacting with the system to receive contextual-based content and other information relating to certain venue locations. This information may be provided responsive to one or more inputs a user might provide within the interface of the mobile device, such as a query formed by one or more keywords, selection of particular search categories (e.g., "Food", "Nightlife", etc.), distance from the user's current location, or other parameters, either alone or in any combination. In one embodiment, a merchant or other user type may be provided the capability of messaging location-based service users responsive to certain criteria.

According to one aspect of the present invention as described above, such content may be automatically delivered to the user without requiring the user provide any inputs. For instance, the user may be delivered contextual-based content without needing to perform a search. For instance, a user might typically navigate a list of venues, select venues on a map, search for venues or recommendations, etc. within a search interface. According to one embodiment, contextual-based content is automatically determined for the user and displayed within the interface (e.g., of a mobile device).

In one embodiment, service 102 may include one or more components. Such components may be implemented using one or more computer systems. In one embodiment, location based service 102 may be implemented on a distributed computer system using one or more communication networks (e.g., the Internet). In one implementation, the service is implemented in a cloud-based computing platform, such as the well-known EC2 platform available commercially from Amazon.com, Seattle, WA. Other implementations are possible and arc within the scope of the invention, and it is appreciated that other platforms may be used.

Service 102 may include a web server 106 which is capable of serving as a front end to the location-based service 102. Devices may communicate and display data provided by service 106 to the user (e.g., user 101). Notably, devices may include controls that perform various functions in a location-based application (such as one or more of application(s) 108), such as viewing venues proximate to the user's location, reviewing information regarding proximate venues left by other users, communicating with other users, among other functions. Further, such devices may provide the location of the user to the location-based service 102, and this location information may be used to perform one or more functions.

Service 102 may also provide one or more related services (e.g., services 107), such as a service for recommending venues, storing pictures based on location, location-based games, or other service that utilizes location information relating to its users. Services 107 may be integral to location-based service 102 or many alternatively operate in conjunction with location-based service 102, (e.g., by communicating with the location-based service through an Application Programming Interface (API)). Notably, according to one aspect of the present invention, recommendations for particular venue locations defined within service 102 may be provided to a user.

Service 102 may also be capable of storing information in one or more databases (e.g., database 103). For instance, service 102 may be configured to store user-based information (e.g., user-based information 104) such as a user identification, identifications of friends associated with the user identification, any history information such as locations visited, preference information for particular venue locations, notes regarding venue locations visited, among other user-related information. Service 102 may also be capable of storing venue information (e.g., venue information 105) that may include, for example, location information (e.g., address, latitude, longitude, altitude, etc.), contact information, venue description, among other information. Venue information may also include, according to one embodiment, preference information for the particular venue.

One commercially-available system that may be suitable for implementing various aspects of the present invention may include the Foursquare service, available at http://www.foursquare.com and provided by Foursquare Labs, Inc., New York. Other systems capable of providing location-based services are available and are capable of implementing various aspects of the present invention.

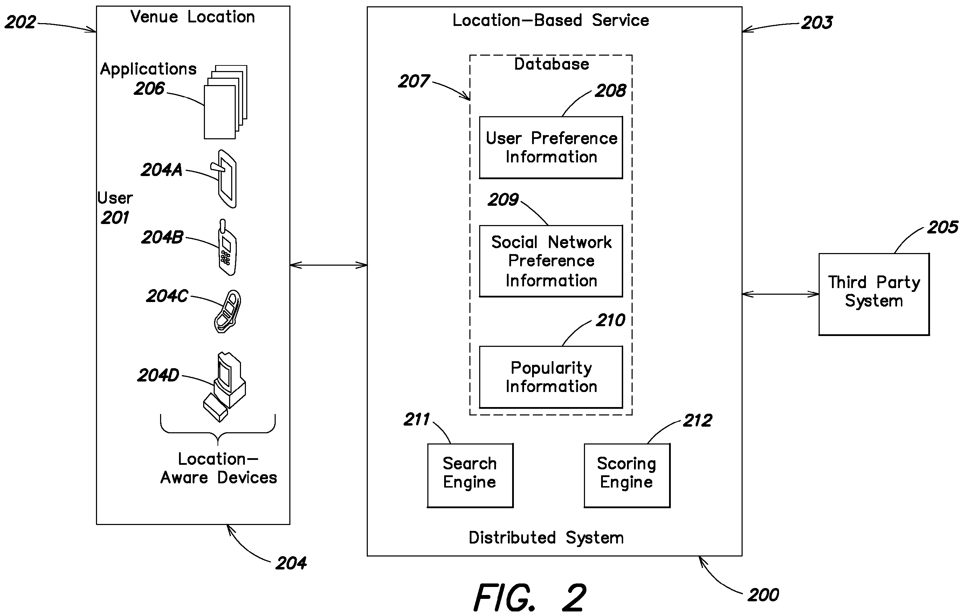

Figure 2 shows a system incorporating various aspects of the present invention. In particular, a distributed computer system (e.g., system 200) may be provided that is capable of providing a facility for delivering contextual-based content in association with a location-based system (e.g., system 203). Such contextual-based content may be provided to one or more users (e.g., through an interface of a user-facing application of a mobile device). Further, such contextual-based content may be provided to other systems and/or applications that work integrally with location-based service 203. For instance, a third party system (e.g., system 205) may be capable of receiving contextual-based content associated with the user from the location-based system.

Such contextual-based content may be presented to users (e.g., user 201) at or near one or more venue locations (e.g., venue location 202) on one or more location-aware devices (e.g., device 204). For instance, contextual-based content may be presented and viewed using one or more applications 206 that execute on a location-aware device. Device 204 may be any device, system, or item that can be used to locate a user, including a tablet computer (element 204A), smart phone (element 204B), cell phone (204C), personal computer (element 204D), or other system type.

Location-based service 203 may include, for example, a search engine 211 that receives search information from one or more applications 206, and provides messages to a location-aware device for display to the user. Search engine 211 may be capable of accepting one or more parameters such as keywords, distance settings, among others, from the location-aware device and provide a list of venues that satisfy the provided parameters. Search engine 211 or any other separate process or element may be capable of ordering and/or ranking the search results based on one or more sets of information stored in a database of the location-based service.

For instance, a database 207 may be provided (either separate or the same as database 203) that stores user preference information (e.g., information 208) relating to venues stored by the location-based service. Such information may include, for example, a history of venues the user has previously visited and their rating of such venues. User preference information may also include preference information for venues that the user has not yet visited. Database 207 may also store social network preference information (e.g., information 209) relating to venues stored by the location-based service. For instance, for users defined within the location-based service or are defined in other social networking applications that are indicated as the current users "friends," information regarding what venues those users have visited, their preferences for particular venues, and preferences for venues that they have not visited may be used to influence what contextual-based content may be displayed to the current user. Contextual-based content may be displayed responsive to any information used in the location-based service, including activity of the user, both active and passive. User activity may include, for example, selecting, searching, viewing or navigating in a location-based service application, checking-in at a venue, operating a mobile device within a particular geographic location, operating a "radar" application that shows venues with a range of the user's location, etc. Further, contextual-based content may be displayed to a user based on activity of other users (e.g., a friend "liked" a particular message). Also, contextual-based content may be displayed based on only location (e.g., display contextual-based content to users currently located in San Francisco). Further, users may be targeted for receiving contextual-based content based on any other information (e.g., targeting users located in particular areas, or targeting users that meet any other location-based criteria). It should be appreciated that contextual-based content may be sent responsive to any activity or information of the location-based service, either alone or in combination with any activity or information.

Database 207 may also store one or more messages associated with the location-based service. For instance, according to one embodiment, the location-based system may include, a targeted message created within the system. The targeted message, when matched to a particular query or criteria related to a location-based user, triggered as a result of the users' location or action within the location-based service application, or as a result of other display criteria, may cause the message to be displayed within the interface of the location-based service application. Such messages may include contextual-based information within the messages. The interface may display any information relating to the location-based message, including, but not limited to text-based messages, photo(s), special or other offer information, or any combination of information.

Database 207 may also store information related to the delivery of contextual information such as location information for the user, information relating to a particular context of the user, their historical context, templates for "cards" or other interface types used to display contextual information, among other information related to the determination and delivery of contextual information.

Further, database 207 may store popularity information (e.g., information 210) relating to venues defined in the location-based service. For instance, other users not within the current user's social network may also be used to determine what recommendations are displayed. For instance, certain venues may be determined as more popular and/or have higher quality ratings as determined by other users, specific groups of users, or the entire network itself.

In one embodiment, the user "checks-in" to the location-based service using an application executing on the mobile device, and responsive to the user "checking-in," that user is permitted to receive messages (e.g., having contextual based content) within the location-based service from a particular venue. Such messages may be delivered to the user at or near a location of the venue where the user "checked in" or where the user is otherwise located. For example, as discussed above, a user's location may be determined by a location-aware device. In certain embodiments, the user may be permitted to check in using a number of different applications (e.g., Check-in4Me, 4squareSMS, Foursquare, etc.) into the same location-based service or from another location-based service that shares location and check-in information regarding users. In one implementation, application providers may be permitted to receive messages from the location-based service for display to their users. Some applications that do not provide check-in services may still be capable of receiving messaging information from the location-based service.

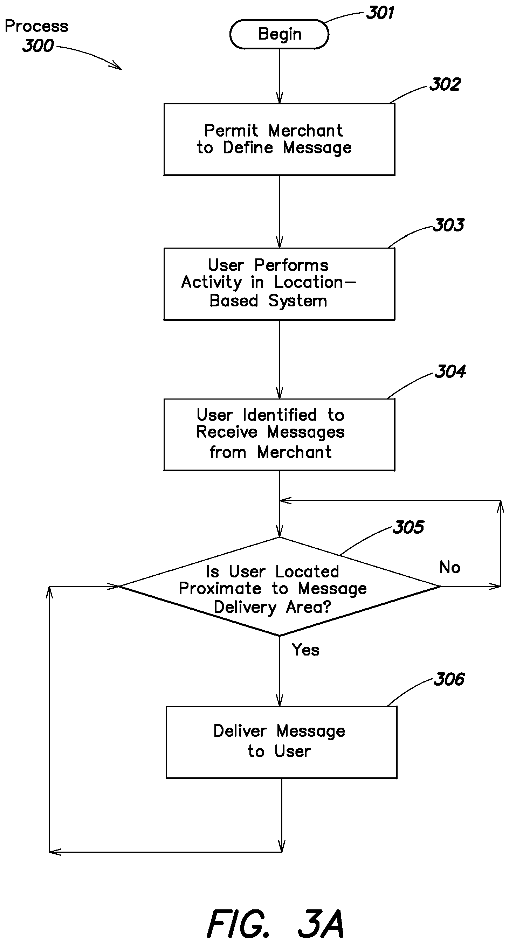

Figure 3A shows an example process 300 for providing messaging capability to a user according to one embodiment of the present invention. At block 301, process 300 begins. At block 302, the system permits a merchant or other entity to define a message (e.g., including contextual based content). This message may have one or more parameters, including information to be communicated to a user. The message may also have images, text, photos, information provided by other users regarding the venue, among other information. At block 303, the user performs an activity within the location-based system. For instance, the user may check in to a venue, operate a location-based application that identifies the user to be located at a particular place or within a region, "liked" or followed a particular venue or chain, operating a map window that shows venues on the map, or any combination of activity may be used to determine when a user is identified to receive messages from the merchant (or venue) at block 304.

It should be appreciated that messages may be sent responsive to any information used in the location-based service, including user activity such as, for example, selecting, searching, viewing or navigating in a location-based service application, checking-in at a venue, operating a mobile device within a particular geographic location, etc.

At block 305, it is determined whether the user is proximate or close to the message delivery area. For instance, the merchant may be permitted to target particular geographical areas (e.g., within a range of the venue, within a particular area, city, state, or other geographical construct, etc.) to which messages are directed. If the user is located at the particular location (or within an area), the location-based system delivers the message to the user at block 306. For instance, the message may be presented to the user within a display of the location-based service application. If the application is not currently active, a background process (e.g., executing on a mobile device) may send a notification to the user responsive to the user being located at the location or within a designated area (e.g., a push notification).

In an embodiment where the merchant may be permitted to send messages not based on location, such messages may be sent at certain times or during certain periods as defined by the merchant. In such a case, users may be targeted for messages based on their activity within the location-based network. Process 300 may continue indefinitely as the location-based system is executed, and the merchant(s) or other entity(ies) may be permitted to create messages and have them delivered to one or more users. In another embodiment, users may be provided controls that allow them to control which merchants/venues may send messages.

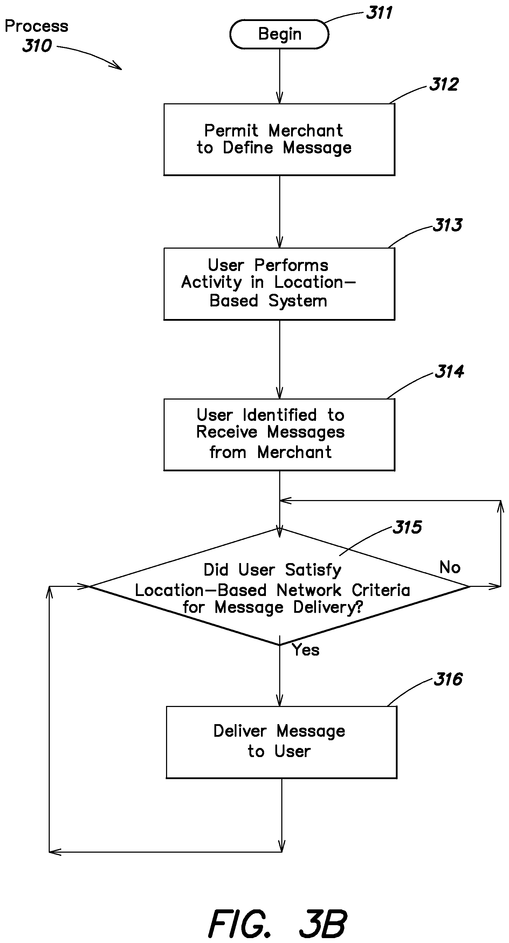

Figure 3B shows an example process 310 for providing messaging capability to a user according to one embodiment of the present invention. At block 311, process 310 begins. At block 312, the system permits a merchant or other entity to define a message. This message may have one or more parameters, including information to be communicated to a user. The message may also have images, text, photos, information provided by other users regarding the venue, among other information. At block 313, the user performs an activity within the location-based system. For instance, the user may check in to a venue, operate a location-based application that identifies the user to be located at a particular place or within a region, "liked" or followed a particular venue or chain, or any combination of activity may be used to determine when a user is identified to receive messages from the merchant (or venue) at block 314.

At block 315, it is determined whether the user is proximate to the message delivery area. For instance, the merchant may be permitted to target particular geographical areas (e.g., within a range of the venue, within a particular area, city, state, or other geographical construct, etc.) to which messages are directed. If the user is located at the particular location (or within an area), the location-based system delivers the message to the user at block 316.

In an embodiment where the merchant may be permitted to send messages not based on location, such messages may be sent at certain times or during certain periods as defined by the merchant. In such a case, users may be targeted for messages based on their activity within the location-based network. Process 310 may continue indefinitely as the location-based system is executed, and the merchant(s) or other entity(ies) may be permitted to create messages and have them delivered to one or more users. In another embodiment, users may be provided controls that allow them to control which merchants/venues may send messages.

In another embodiment, social networking systems may also be leveraged to find associations with merchants/venues, or otherwise communicate with users (e.g., messages may be propagated to one or more social networks with which the user is associated). In one embodiment, a social networking platform may be integrated with a location-based system, and one or more associations between location-based entities may be shared between the social network and location-based network. In one implementation, controls may be provided that permit relationship information relating users and other entities such as venues, manufacturers, and other entities to be shared among systems.

Merchants may be permitted to send broadcasts based on one or more criteria, either alone or in combination with other criteria. For instance, a relationship between the user and the merchant or venue may determine whether a particular user receives a message from the merchant or venue (or other location-based service item). For instance, in one implementation, a user's direct engagement with received messages may determine whether that user receives additional messages. For instance, if a user "likes" or comments on a message, selects the "like" or comment, the location-based service may record that action and will show future messages from the merchant, venue, or other location-based service item because the user performed an action relative to that merchant, venue, or item. Merchants may also be able to determine a geofence within which users that have relationships to the merchant, venue, or item will receive messages. For instance, a merchant may define a point and radius distance within which the user will receive messages, an address, latitude/longitude or other location-based criteria that specifies an area in which the user can receive messages. Further, the merchant may be permitted to set triggers that define the conditions under which a user will receive a message. For instance, a merchant or location-based entity may define a trigger that determines the closeness of the user to a designated location in which the merchant is messaging about. In another example, a trigger may be defined based on a closeness of the user to a location that the message is being generated. In yet another example, a trigger may be defined based on a closeness of a user to any location within a chain of merchant locations.

Merchants may also be provided a capability of targeting users, not just based on their location, but also the context. For instance, this would enable a merchant to send a message such as one that directs a message to "anyone stopped at JFK for more than 10 minutes who has a previous history with rental car companies." In conventional systems, such messages may only be sent based on a particular location. By allowing merchants to define contextual information that leads to a triggering event, finer controls are provided to the merchant to target users more effectively.

Further, users may be able to "opt-in" to receiving different messages from venues or locations that the user is interested in viewing. For instance, a user may selectively opt-in to certain venues, groups of venues, or other items or geographical areas that the user is interested in receiving. For instance, the user may opt-in to receive messages from a favorite coffee place in New York, even though the user is located in San Francisco for the week.

Further, a user's engagement over time may affect whether the user receives messages from the location-based service. For instance, a time-weighted measurement of the user's checkin history (e.g., weighted more heavily toward recent checkins) may be used to determine if the user receives updates from a particular venue. In another implementation, a rolling average (e.g., three month rolling average) may be used to avoid receiving messages from venues the user no longer frequents. Other time or frequency-based approaches may be used, such as by determining how often a user selects the venue within the location-based application, how often the user views a venue web page or application page related to the venue, or other number of other actions the user performs with the location-based item.

In another embodiment, a user's social connections may determine whether the user receives messages from the merchant, venue or item. For instance, if a friend is engaged with the merchant, venue or item, the user may be sent messages by the location-based service. Also, how frequently a user's friends check-in to the venue may be used by the location-based service to determine if the user receives messages from the merchant, venue or item. Also, if a user's friends "like" a particular venue or comment on the venue, commented on messages sent, or "like" particular messages, the location-based service may opt-in a user for receiving messages from the merchant, venue or item.

Further, the merchant, venue, item, and/or related messages' popularity may determine whether a user may receive currently defined or future messages. For instance, if a current message has 50,000 likes and the user has a weak association with the venue, the location-based service may direct the message to the user. Other signals may be used to determine whether messaging is performed, such as determining on how many lists the venue appears, how many of the user's friends liked the venue or have checked in to the venue, etc.

Further, in another implementation, a user may be permitted to send a message to his/her network regarding the message. For example, a venue may be having a special that the user would like to broadcast to their friends that are located in his/her neighborhood. A facility may be provided within the location-based service for users to communicate messages locally to other users in their social network.

In general, a facility if provided to the merchant, venue or other user to create a message in a location-based system that is delivered to users selectively at different points in time based on their activities with the location-based network. This contrasts to general messaging facilities (e.g., email, texts, etc.) where messages are sent as soon as they are defined to specific users or specific groups of users. Rather, merchants, venue operator or other user types may define a message with different triggering parameters, and users receive that message when the conditions are triggered. If done appropriately, messages are more accurately targeted to users that are in the best position to act on the messages, the messages are of the type in which the user is interested and the user is less apt to ignore them, or the messages are "opted-in" by the user and the user will receive the messages as long as they would like to receive them. One parameter includes the user's location in relation to a defined location by the merchant. For example, the merchant may define (e.g., within a management interface) a location that, when the user enters or is located within a certain distance of, triggers a condition that would cause a message to be sent or otherwise displayed to the user within a location-based service application. This capability is particular useful for merchants or venue owners that wish to create messages that are viewed by local users.

One aspect of the present invention relates to surfacing interesting local content for location-based service users at the times when the data is most actionable and engaging. Often there is a large amount of content to choose from, and there are questions of which content should be displayed or is interesting enough to send as a notification to the user. According to one embodiment, the location-based service optimizes a ranking of nearby local content using click-through data.

The location-based service may include a set of modules. Each module may be responsible for generating nearby content of a specific type, and presenting the content in one of two ways, as a card (e.g., a display element that is displayed at the top of a stream of content under the map), or as a ping (a short text message possibly comprised of the output of multiple modules). Each module can also register a set of rules for when the content is relevant, for example the "Sights" module only fires when a user is located in unfamiliar areas. Other example modules may include a "Friends nearby" module that provides contextual information relating to social network connections, a "Trending venues" module that provides contextual information in relation to popular venues or locations, a "New and Notable" module which tracks new location-based items and their popularity, a "Saved venues" module which tracks and provides contextual information regarding venues saved by the particular user, a "Sights" module, a "Watchlist tips" module that provides contextual information regarding items placed on a watchlist, among others.

As discussed above, one possible implementation includes displaying a series of cards within a mobile interface that includes the contextual information. For instance, when the user initiates an application on his/her mobile device (e.g., a location-based service application), a determination of a user's context is made, a search for relevant content is made by each module, and each of the modules attempt to generate content based on the determined context. A list of possible modules having content is generated, and a ranking function is used to rank the content from the modules and a limited number of the content modules are chosen to display the content within the mobile device interface. In one implementation, this content is displayed within cards.

The user's behavior related to this content is observed. For instance, if a user selects or "clicks" on the interface, that selection is recorded. A feedback loop may be used to determine or learn which modules are the most interesting to the user. A machine-learned model may be created that is optimized by user selections which can be then used by the ranking function for later displays of contextual information to the user.

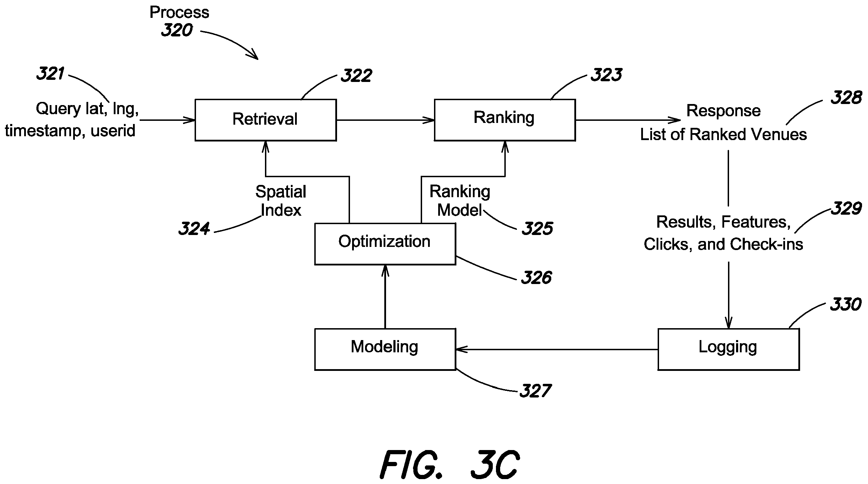

Figure 3C shows a block diagram of a system architecture and process that may be used to perform queries in a location-based service according to one embodiment of the present invention. As shown, process 320 may process a query 321 including a user's location (e.g., as specified by latitude/longitude information), a timestamp, and userid. A retrieval is performed using a spatial index which generates a set of candidate venues in which a user may possibly be located. A ranking model 325 (e.g., a machine learned ranker) may be used to sort and perform a ranking (e.g., ranking 323) of the venues to produce a set of response venues 328. Data including results, features, clicks and check-ins may be logged (e.g., element 330) from the search process and used offline for modeling (e.g., element 327) and optimization (e.g., element 326).

For instance, within a location-based service application, a user may select a check-in function, and the application may send the user's ID and current location to a location-based server. The user ID may be a unique identifier that is used to retrieve the user's history, friends, interests, and other personalized information used for ranking. The user's location is reported by the mobile device includes latitude, longitude, and a horizontal accuracy reading. A timestamp is generated at query time on the server (e.g., in UTC), and is used to identify historical patterns in the venue popularity for ranking.

Interface of the location-based application may present the user with a list of nearby locations, along with a map for context. The location shown may be chosen based on a variety of factors including their popularity, distance from the user, and compatibility with the user's history. In particular, the current number of other users checked into each venue may be displayed, which can help give the user an indication of the current popularity of the venues.

In certain situations, if the location which the user is interested is not returned, they may perform an explicit textual query to find the correct venue based on a query search. If the user still cannot find the desired location after a search, they may be offered the option of creating a new venue in the database. The venue may be created in the database and made available to users for check-in.

One goal of the spatial search engine is to accurately retrieve link candidate venues which best match a query. The query includes a user, timestamp, and location, and as discussed above, the location includes latitude, longitude, and an estimate of horizontal accuracy. For each query, a candidate set of venues may be generated using a course spatial index. Features may be computed for each query-venue pair, including relationships between each query and the candidate venue, such as distance, personal history of the user, etc. For each query-venue pair, it may be observed whether the user actually checked-in to a venue after performing a query.

Each check-in to a venue helps define exactly where a place is on the surface of the earth. Despite each individual GPS estimate of thousands of devices of a particular location based on a check-in, an aggregate of these estimates may provide an accurate picture of the venue. The spatial model may be used to evaluate the probability that a set of location coordinates belongs to a specific venue. A confidence score (or probability) may be used to determine whether a current location of a user is located at the specific venue per the spatial model. In one example implementation, a mean value may be calculated for a latitude and longitude of the venue from a set of check-in data. In another example model, a probabilistic model may be created for the shape of a particular venue based on such check-ins. Further, it is appreciated that each check-in also reveals information about the times at which places are popular (e.g., times of day, days of week, etc.). Further, it is appreciated that the probability that a particular user is located at a particular destination may depend on time as well, so the model may provide a listing of popular locations near the user's location and may also factor in at what time the user's location is determined. Such a model may be used by a location-based service to determine an actual location of a user at a particular venue which may trigger a display of contextual information (e.g., upon arrival of the user to the venue).

As discussed above, one goal of a spatial search engine is to accurately retrieve and rank candidate venues which best match a query. In one specific implementation, each query consists of a user, timestamp, and location $q_i = (u, t, l)$, where the location consists of a latitude, longitude, and an estimate of horizontal accuracy. For each query, a process may first generate a candidate set of venues $S_i = \{v_1, v_2, ... v_{mi}\}$ using a coarse spatial index. Then, features may be computed for each query-venue pair $F(q_i, v_j) = x_{i,j} \in \mathbb{R}^d$, where the d features capture various relationships between each query and the candidate venue, such as distance, prior personal history of the user, etc. The response set $R_i$ consists of the venues in the candidate set $S_i$ rank ordered by some function of the features $G(x_{i,j})$. For example, a simple linear model, represented as a vector of weights $w \in \mathbb{R}^d$, would yield $G(x_{i,j}) = w^T x_{i,j}$. For each query-venue pair we then observe a value $y_{i,j} \in \{0, 1\}$ which indicates whether the user actually checked into venue $v_j$ after performing query $q_i$.

A simple spatial model that may be computed from check-ins is based on the latitude and longitude of the center of the venue's check-ins, $l_{c(v)}$. It is possible to compute $l_{c(v)}$ by taking all check-ins to a venue, $c(v)$, removing outliers, and taking the mean of both the latitudes and longitudes. Then given a query location $l$, we can approximate a distance-based spatial score as:

$$P(l \mid v) \approx \left( \frac{d}{\text{dist}(l, l_{c(v)}) + d} \right)^e$$

where $d = 50$ meters, $e = 4$, and $\text{dist}(l, l_{c(v)})$ is calculated by the well-known Haversine formula. It is appreciated that using a distance-based score by itself is a relatively poor predictor of the correct venue for a given set of location coordinates, particularly in dense urban areas. To address this problem, probabilistic models of the shape of a venue and the distribution of the observed GPS noise as a mixture of bivariate Gaussians may be used:

$$P(l \mid v) = \sum_k c_k g(l \mid \mu_k, \Sigma_k),$$

where $g(l, \mu_k, \Sigma_k)$ represents a bivariate Gaussian with mean $\mu_k$ and covariance $\Sigma_k$ evaluated at location $l$, and $c_k$ represents the mixing proportions. The parameters for this model can be learned via expectation maximization. Each check-in also reveals information about the times at which places are popular. For example, this temporal signal may be defined as the probability that a check-in at a venue happens at a specific hour of the week, and estimate this probability using maximum likelihood:

$$P(t \mid v) = \frac{\# \text{ of check-ins at wh}(t)}{\text{total } \# \text{ of check-ins}},$$

where wh($t$) is the hour of the week corresponding to time t. This signal is vital for distinguishing between venues which are close in distance but popular at different times, for example a bar that is next to a bakery. A variety of real-time signals may also be calculated about venues as well. An exponential moving average of check-ins/day may be used to measure the current popularity of venues. A count of the number of people who are currently checked into the venue may also be determined and may be defined as those users who have been at the venue less than several hours and have not yet checked into another place.

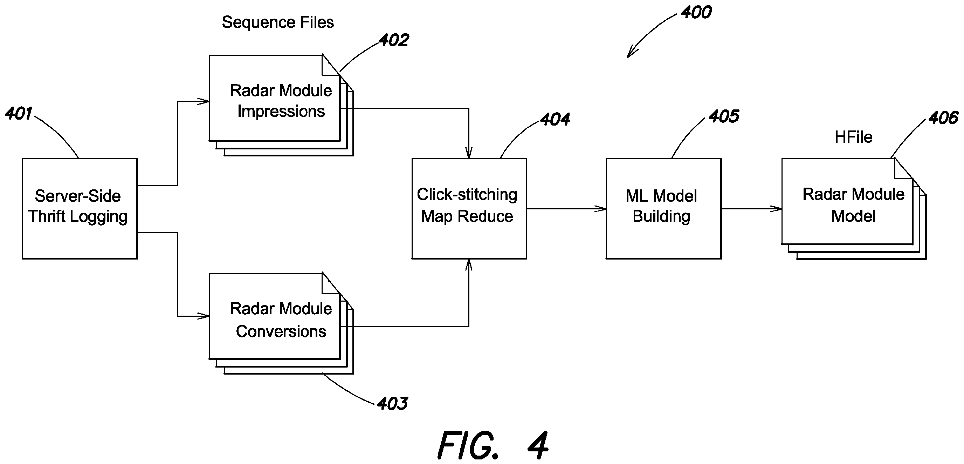

Figure 4 shows an example process 400 for processing and serving contextual based information to a mobile user according to one embodiment of the present invention. At block 401, a server-based process of a location based service logs displays of contextual information to the user at a mobile device. The process or module, referred to herein as a "radar" module, uses the location of the user, his/her identity along with other information to determine contextual based content to be displayed. For instance, the process may collect identification information for the user (e.g., a user ID), and other information based on the user's location, movement, among other information. The service may determine a context of the user based on the information collected. A log of information displayed to the user may be recorded, along with the selection of contextual information.

According to one embodiment, a model may be periodically updated for the user based on these impressions and conversions (e.g., selections). For instance, the model may be updated daily, nightly, based on usage, or based on some other periodic manner or user criteria.

Further, one or more sequence files may be stored and maintained for the user that includes these impressions and selections (e.g., in a stitched file format with impressions and clicks that are associated with each other). For instance, sequence information may be stored for impressions for a user (e.g., radar module impressions 402 stored as a sequence file), and/or conversions for the user (e.g., selections or clicks of contextual based content by the user stored at radar module clicks 403 as a sequence file). The information (e.g., a stitched file) may be processed by a machine learning map reduce operation (e.g., by a click-stitching map reduce operation 404), the output of which may be served as an output file (e.g., an Hfile radar module model 406) that can be used at runtime by a ranking algorithm that ranks the contextual information for the user.

In one embodiment of the invention, a ranking algorithm may show for a certain percentage of the time (e.g., 90%), the location-based service shows content of the modules that maximize predicted engagement. In another percentage of the time (e.g., 10%), the location-based service may perform some other prioritization of module output, such as, for example, randomly ordering module output, inserting one module at random into the list (e.g., with 1-2 others that maximize engagement). Thus, according to one embodiment, a mix may be created of module outputs that are predicted to perform the best, and module outputs that are "new" and the user is likely to explore.

Below are some examples of module ranking methods that may be used. It should be appreciated that these methods may be used alone or in combination with other methods, and that other methods may be used:

Example 1: Rank modules simply by their expected clickthrough rate (CTR), accounting for standard deviation in cases where there are not many examples. This model could be a single number per module.

Friends nearby: 4.5%
Trending: 3.2%
New + Notable: 2.3%

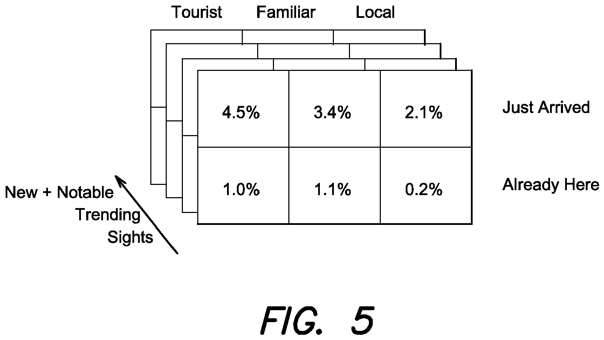

Example 2: Contextual information may be used such as familiarity to improve CTR prediction and better maximize the CTR for the context the user is in. One first simple definition of context is a single bucket state based on the user's familiarity with the region and recency of when the user arrived. The context could grow to contain other information about the user, their interactions with past content, and basic quality scores about the content and other features describing how the content is displayed. An example of a model using familiarity is shown by way of example in Figure 5. As shown, a number of contextual categories are determined for the user, and CTR is measured for each bucket based on the user's familiarity with the region and recency of when the user arrived. Depending on whether the user is determined to be unfamiliar with the area (e.g., a "Tourist" category), familiar with the area (e.g., a "Familiar" category), or very familiar (e.g., a "Local" category), that user may be more or less likely to select particular categories of contextual content. For instance, a "Tourist" category may be more interested in seeing content from a "Sights" category, and therefore, based on the location of the user, the user may be determined to be in the Tourist category, and therefore, different contextual content will be shown to this particular user based on location and/or recency of arrival.

Example 3: A linear model or decision tree that takes into account many features that describe the user, their tastes, the region they are in, and their prior interactions with different types of content, as well as the quality and display of the content produced by each module. Features that may be used include, but are not limited to:

General features:

- time of day and day of week

User-specific features:

- city and neighborhood level familiarity
- number of friends
- age
- demographics
- check-in category distribution
- prior module click distribution
- average explore score (e.g., equivalent to venue rating) of results
- here now counts
- predicted timeliness score
- friends here now counts
- friends closeness score (e.g., for people that are "friends")
- saved score (on the user's lists)

It should be appreciated that other information may be used, either alone or in combination with the information above.

According to one embodiment, the location-based service logs the context and the ranking signals that went into creating an impression (e.g., a display of contextual information to the user in an interface of the mobile device). In one embodiment, impressions may be cached into a database when directed message is created and "replayed" when the impression is actually displayed on the client device. As referred to herein, the first request may be referred to as a "creation request" (e.g., creation within the location-based service) and the second request may be referred to as a "display request" (e.g., a display request generated by the client device for module content). In some implementations, there may not be two different requests.

According to one embodiment, information stored relating to impressions and clicks may include the following example information:

Radar impression:

- creation requestId
- display requestId
- userid
- timestamp
- module type
- submodule type
- radar context (includes context info and feature set, e.g., feature: user's familiarity with the area)
- recFlow

Radar Click:

- creation requestId
- display requestId
- userid
- timestamp
- click position
- click type (enumeration for different click targets: like explore request, tip view, venue view, etc.)

- click requestId (requestId associated with the click event API call. e.g.: in case of venue view, the requestId for the actual request to view the venue. Useful if joining with the click request)
- venueId (if ClickType = Venue View)
- tipId (if ClickType = TipView)
- explore requestId (if an Explore request)

According to one embodiment, the system is capable of logging and keeping track of every time a radar card is shown to the user, and whether or not the user selected that card. For instance, with a logged radar response, the response is uniquely identified by a request ID. The response may also contain the context data used to generate cards, performance characteristics, and a list of impressions. An impression may be uniquely identified by an impression ID which is generated every time the card is shown to the user. The impression data may contain module type information, position shown, and other info about the card. The impression data may also contain a field generatedRequestId that identifies all impressions built from the same data but potentially cached and shown multiple times. A conversion or "click" may be uniquely defined by a combination of impression ID and a timestamp indicating the time that the content was "converted" (e.g., selected within the interface, later acted on passively, etc.). The conversion may also contain more information about the location-based service item that was converted (e.g., a venue, tip, etc.).

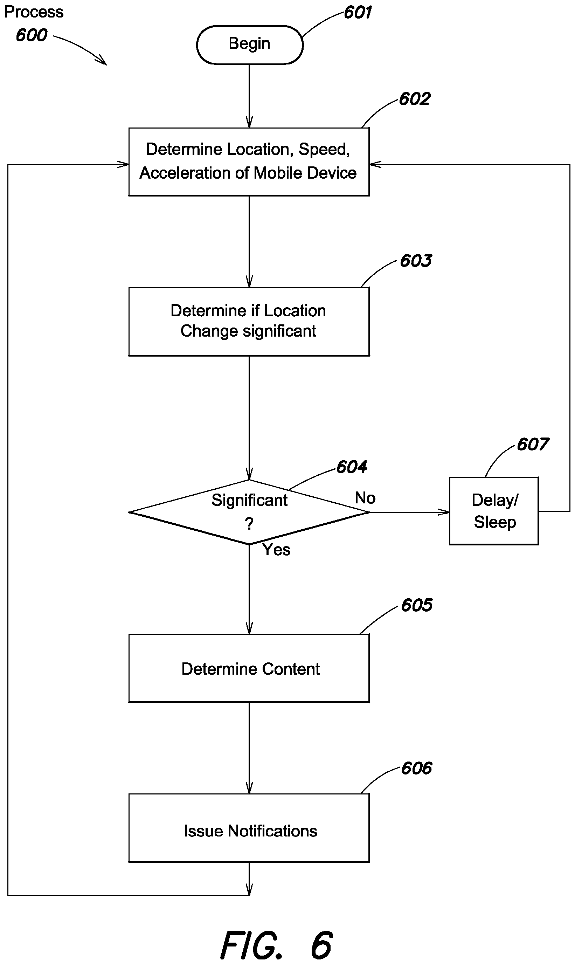

According to another aspect of the present invention, a method is provided for periodically delivering content to the user while minimizing processing and battery life impact on a mobile device. In one aspect, a process is provided that tracks user movement periodically, and delivers content when a contextual change has occurred, thus minimizing the impact on the mobile device. Figure 6 shows an example process 600 that delivers contextual information periodically to the user. At block 601, process 600 begins. At block 602, the location, speed, and acceleration is determined for the user's mobile device. For instance, such information may be determined based on the change location over time of the device is determined through GPS, WiFi triangulation, and/or combinations of these and other methods. At block 603, is determined whether the change of location of them mobile devices significant. For instance, it is appreciated that if the location of the device is not changed, the users context is not changed as well, and therefore there may not be a need to deliver new content.

At block 604, it is determined whether the change is significant. If not, a monitoring process that monitors the user's location may perform a delay or sleep operation (e.g., at block 607), and after a predefined amount of time, the process may determine whether there is any change in the user's location. If it is determined that the user's location change is significant, the process will determine content to be displayed to the user (e.g., in the display of mobile device). As discussed, content may be determined by one or more modules that determine the users locational context, and deliver content based on the context. At block 606, the location-based service may issue a notification to the user's mobile device to display the selected content. As discussed above, such content may be displayed within an interface of a location-based application or sentence notifications directly to the user's mobile device. Such a process may be combined with any of the contextual determinations herein to create an efficient system for notifying users of contextual local content.

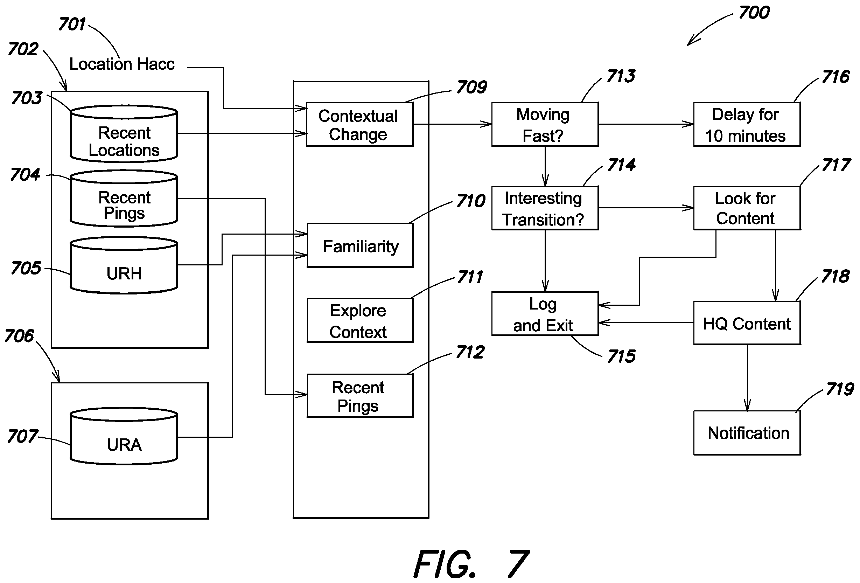

Figure 7 shows a block diagram of another example process for delivering content to a mobile device according to one embodiment of the present invention. For instance, as shown in Figure 7, the location of the user's mobile device in association with other information may be used to determine an efficient delivery of contextual content to user's mobile device. A distributed process 700 uses a current location information 701 relating to the device along with historical information to determine whether a contextual change exists (e.g., at block 709). Other information, such as the speed and acceleration of the mobile device may determine whether a context change exists for the user. For instance, at block 713 it may be determined that too fast such that a delivery of information is not likely to result in a conversion. For instance, user may be driving in a car on his/her way to a destination, but may not appreciate or take advantage of information displays along the route. At block 716, the monitoring process may delay for a predetermined amount of time (e.g., 10 minutes) before determining whether a contextual change has occurred.

At block 714, if an interesting transition has occurred, a process looks for content to display the user (e.g., at block 717). At block 718, high quality content is determined for the user based on the users context and displayed to the user on the display of mobile device or sentence and notification to the user's mobile device (e.g., at block 719). Information related to location changes, impressions, click-throughs, and other activity is logged to the system (e.g., stored in a database, file or other storage structure), and the process exits (at block 715).

As discussed, historical information may be stored within a database (e.g., database 702), including but not limited to, recent locations 703, recent pings (or notifications) 704 and any other information that can be stored in a database relating to a location-based user. A process (e.g., a radar process) may use the contextual change data 709, familiarity of the user (e.g., familiarity data 710), their application context (e.g., where the user is at within an "Explore" mode of a location-based service application while searching for location-based service items such as venues, etc.), recent pings or notifications sent to the user to determine what contextual content will be displayed to the user (e.g., at a next request by the mobile device, or by a notification process that pushes content to the mobile device).

According to one implementation, User Region Aggregation (URA) 707 may be determined for a geographical area (e.g., a city) based on public checkin counts, passive day counts, among other information for that user to determine familiarity of that user for venues, locations, and other items. Such information may be aggregated for periods of time, and updated periodically (e.g., daily, nightly, etc.). User Region History (URH) 705 may be stored historically for each user, and records, in real-time, the historical behavior of that user within the region over time. In one implementation, the location-based service may record over a predetermined time whether the user was in a particular region (e.g., by measuring checkins, or passive monitoring). Measurement of URA drives familiarity for that user (e.g., whether they are classified as a tourist, local, or familiar) and URH drives arrival (e.g., whether the user is classified as just-arrived, here-often). Such information may be used to rank and/or determine when particular content types are displayed to the user.

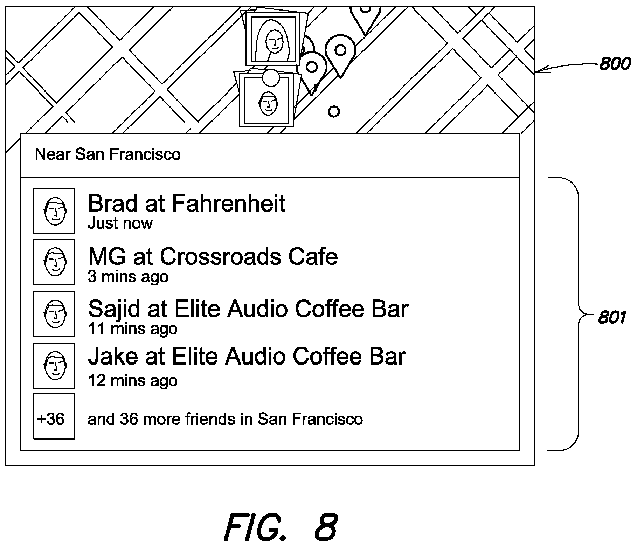

Figure 8 shows an example interface associated with contextual content that may be communicated in a location-based service according to one embodiment of the present invention. For instance, a user's mobile device may include an interface 800 which shows the current location of the user as well as displaying contextual content within at least a portion of the interface. For example, interface 800 may include an area 801 shows friends nearby generated by a module associated with displaying locally located friends defined within the location-based service. Such an interface may be shown for example, as a result of the user locating to a new location (e.g., San Francisco). As discussed, such information may be displayed within the interface as a series of "cards" that display the contextual information (or a portion thereof). The user may select one of the cards to retrieve more information regarding the contextual item.

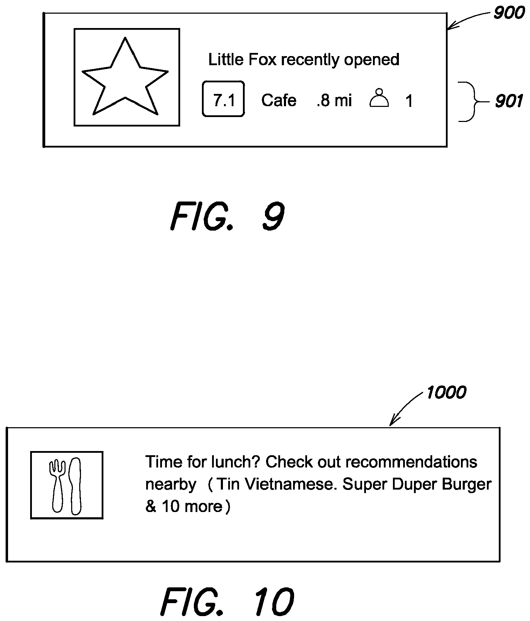

Figure 9 shows another example interface according to various embodiments of the present invention. In the example interface 900 shown, a card may be created for a "Recently Opened" item, there may be a template card in which contextual content may be inserted and displayed to the user. For instance, interface 900 may include one or more areas to include content (e.g., "Little Fox recently opened"). The card may also include a number of other information items 901 regarding the context that might be interesting to the user, such as, for example, the type of venue recently opened, how far away the venue is located, the user rating of the venue, how many people are currently checked in to the venue, among other information. According to one embodiment, the card may be displayed in association with a map showing the present user location. Also, the cards may be arranged in a stream of display items, with most recent items displayed at or near the top of the stream.

Figure 10 shows another example interface according to one embodiment of the present invention. In the example interface 1000 shown, a card may be created for a "Recently Mealtime Suggestions" item, there may be a template card in which contextual content may be inserted and displayed to the user. This particular card may be triggered by a module that is time dependent, and may trigger certain predefined content such as 'Time for Lunch? Check out recommendations nearby," "Time for Dinner? ...", among other messages which may be keyed to the time of the day that they are triggered. Depending on the time of day, certain venues may be suggested to the user (e.g., as determined by a ranking function that may determine the best venues by distance, rating, whether the user visited and/or commented on the venue, among other location-based service criteria.

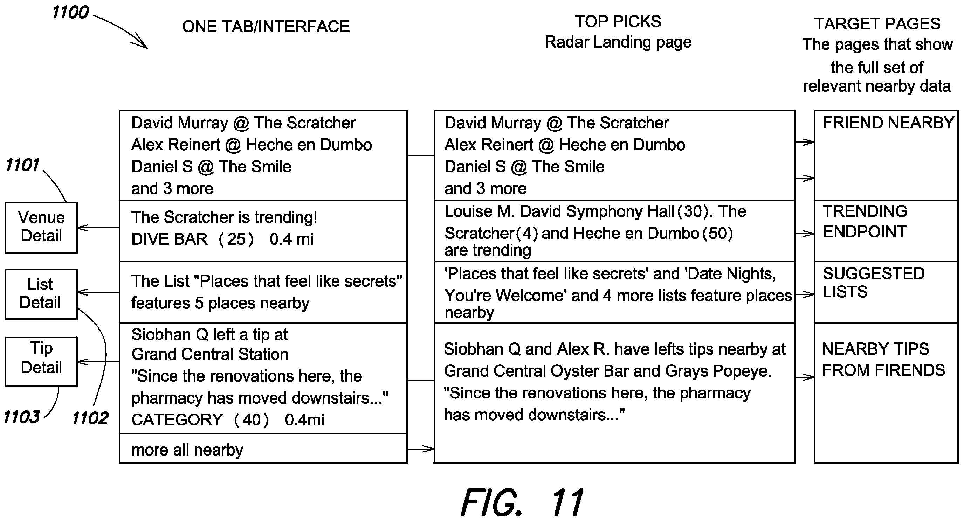

Figure 11 shows a collection 1100 of example interfaces according to another embodiment of the present invention. As discussed, cards and their contextual data may be aggregated into a single display of a mobile device. Further, there may be different screen types that have different arrangements of cards depending on the context within the location-based service application. For instance, in one tab/interface type, there may be an arrangement of single-item cards that are driven by modules of various themes. For instance, a "Friends Nearby," 'Trending Endpoint," "Suggested Lists," "Nearby Tip From a Friend" or other type of card may be arranged within the interface. When any of these cards are selected by the user within the interface, the interface may display the detailed information associated with the contextual based content. For instance, when a particular card is selected by the user, venue detail information 1101, list detail information 1102, or tip detail information 1103 may be displayed.

In another interface arrangement, a "Top Picks" interface may be shown (which may also be a default landing page for the radar process) which includes a number of cards being driven by different contextual content modules. For instance, a "Friends Nearby," 'Trending Endpoint," "Suggested Lists," "Nearby Tip From a Friend" or other type of card may be arranged within the interface. When selected by the user within the interface, target pages may be shown to the user that includes a full set of relevant nearby data for that particular module. For instance, full lists of relevant nearby data may be shown when the associated page is selected by the user. It should be appreciated that other arrangements of content and pages are possible that can show relevant contextual information for the user.

Example Computer Implementations

Processes described above are merely illustrative embodiments of systems that may provide contextual content in association with a location-based service. Such illustrative embodiments are not intended to limit the scope of the present invention, as any of numerous other implementations for performing the invention. None of the claims set forth below are intended to be limited to any particular implementation of a method of providing player incentives, unless such claim includes a limitation explicitly reciting a particular implementation.

Processes and methods associated with various embodiments, acts thereof and various embodiments and variations of these methods and acts, individually or in combination, may be defined by computer-readable signals tangibly embodied on a computer-readable medium, for example, a non-volatile recording medium, an integrated circuit memory element, or a combination thereof. According to one embodiment, the computer-readable medium may be non-transitory in that the computer-executable instructions may be stored permanently or semi-permanently on the medium. Such signals may define instructions, for example, as part of one or more programs, that as a result of being executed by a computer, instruct the computer to perform one or more of the methods or acts described herein, and/or various embodiments, variations and combinations thereof. Such instructions may be written in any of a plurality of programming languages, for example, Java, Visual Basic, C, C#, or C++, Fortran, Pascal, Eiffel, Basic, COBOL, etc., or any of a variety of combinations thereof. The computer-readable medium on which such instructions are stored may reside on one or more of the components of a general-purpose computer described above, and may be distributed across one or more of such components.

The computer-readable medium may be transportable such that the instructions stored thereon can be loaded onto any computer system resource to implement the aspects of the present invention discussed herein. In addition, it should be appreciated that the instructions stored on the computer-readable medium, described above, are not limited to instructions embodied as part of an application program running on a host computer. Rather, the instructions may be embodied as any type of computer code (e.g., software or microcode) that can be employed to program a processor to implement the above-discussed aspects of the present invention.

Various embodiments according to the invention may be implemented on one or more computer systems. These computer systems may be, for example, general-purpose computers such as those based on Intel PENTIUM-type processor, Motorola PowerPC, Sun UltraSPARC, Hewlett-Packard PA-RISC processors, ARM Cortex processor, Qualcomm Scorpion processor, or any other type of processor. It should be appreciated that one or more of any type computer system may be used to provide location-based services according to various embodiments of the invention. Further, the system may be located on a single computer or may be distributed among a plurality of computers attached by a communications network.

The computer system may include specially-programmed, special-purpose hardware, for example, an application-specific integrated circuit (ASIC). Aspects of the invention may be implemented in software, hardware or firmware, or any combination thereof. Further, such methods, acts, systems, system elements and components thereof may be implemented as part of the present invention.

One or more portions of the computer system may be distributed across one or more computer systems coupled to a communications network. These computer systems also may be general-purpose computer systems. For example, various aspects of the invention may be distributed among one or more computer systems configured to provide a service (e.g., servers) to one or more client computers, or to perform an overall task as part of a distributed system. For example, various aspects of the invention may be performed on a client-server system that includes components distributed among one or more server systems that perform various functions according to various embodiments of the invention. These components may be executable, intermediate (e.g., IL) or interpreted (e.g., Java) code which communicate over a communication network (e.g., the Internet) using a communication protocol (e.g., TCP/IP).

It should be appreciated that the invention is not limited to executing on any particular system or group of systems. Also, it should be appreciated that the invention is not limited to any particular distributed architecture, network, or communication protocol.

Various embodiments of the present invention may be programmed using an object-oriented programming language, such as SmallTalk, Java, C++, Ada, or C# (C-Sharp). Other object-oriented programming languages may also be used. Alternatively, functional, scripting, and/or logical programming languages may be used. Various aspects of the invention may be implemented in a non-programmed environment (e.g., documents created in HTML, XML or other format that, when viewed in a window of a browser program, render aspects of a graphical-user interface (GUI) or perform other functions). Various aspects of the invention may be implemented as programmed or non-programmed elements, or any combination thereof.

Further, on each of the one or more computer systems that include one or more components of distributed system 200, each of the components may reside in one or more locations on the system. For example, different portions of the components of system 200 may reside in different areas of memory (e.g., RAM, ROM, disk, etc.) on one or more computer systems. Each of such one or more computer systems may include, among other components, a plurality of known components such as one or more processors, a memory system, a disk storage system, one or more network interfaces, and one or more busses or other internal communication links interconnecting the various components.

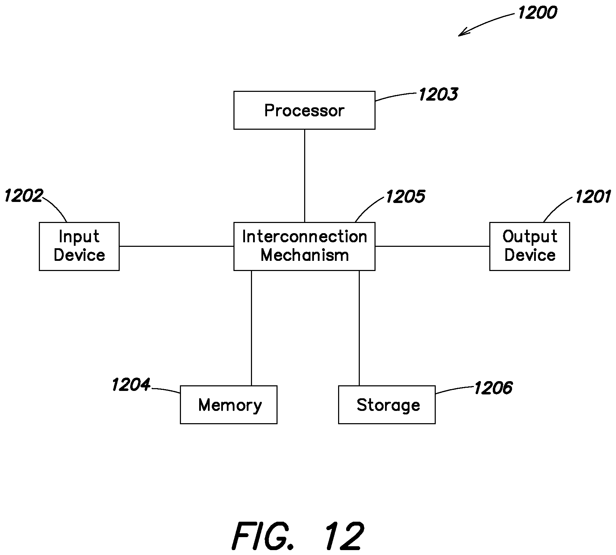

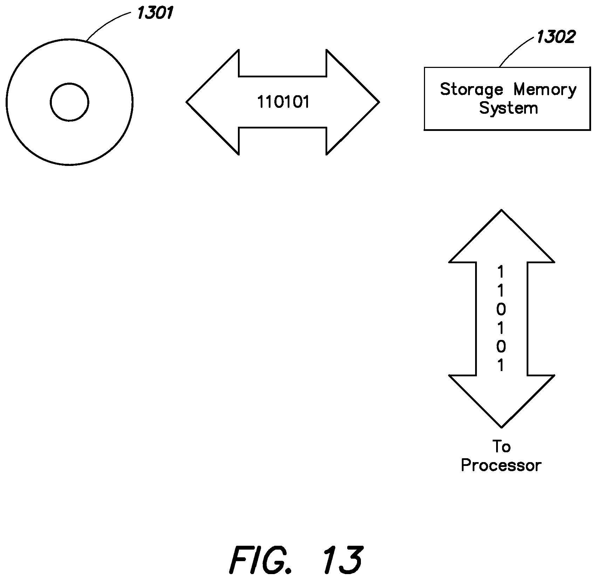

Any number of systems of distributed system 200 may be implemented on a computer system described below in relation to Figs. 12 and 13. In particular, Fig. 12 shows an example computer system 1200 used to implement various aspects. Fig. 13 shows an example storage system that may be used.

System 1200 is merely an illustrative embodiment of a computer system suitable for implementing various aspects of the invention. Such an illustrative embodiment is not intended to limit the scope of the invention, as any of numerous other implementations of the system, for example, are possible and are intended to fall within the scope of the invention. For example, a virtual computing platform may be used. None of the claims set forth below are intended to be limited to any particular implementation of the system unless such claim includes a limitation explicitly reciting a particular implementation.

Various embodiments according to the invention may be implemented on one or more computer systems. These computer systems may be, for example, general-purpose computers such as those based on Intel PENTIUM-type processor, Motorola PowerPC, Sun UltraSPARC, Hewlett-Packard PA-RISC processors, or any other type of processor. It should be appreciated that one or more of any type computer system may be used to partially or fully automate integration of the location-based services with the other systems and services according to various embodiments of the invention. Further, the software design system may be located on a single computer or may be distributed among a plurality of computers attached by a communications network.

For example, various aspects of the invention may be implemented as specialized software executing in a general-purpose computer system 1200 such as that shown in Figure 12. The computer system 1200 may include a processor 1203 connected to one or more memory devices 1204, such as a disk drive, memory, or other device for storing data. Memory 1204 is typically used for storing programs and data during operation of the computer system 1200. Components of computer system 1200 may be coupled by an interconnection mechanism 1205, which may include one or more busses (e.g., between components that are integrated within a same machine) and/or a network (e.g., between components that reside on separate discrete machines). The interconnection mechanism 1205 enables communications (e.g., data, instructions) to be exchanged between system components of system 1200. Computer system 1200 also includes one or more input devices 1202, for example, a keyboard, mouse, trackball, microphone, touch screen, and one or more output devices 1201, for example, a printing device, display screen, and/or speaker. In addition, computer system 1200 may contain one or more interfaces (not shown) that connect computer system 1200 to a communication network (in addition or as an alternative to the interconnection mechanism 1205.

The storage system 1206, shown in greater detail in Fig. 13, typically includes a computer readable and writeable nonvolatile recording medium 1301 in which signals are stored that define a program to be executed by the processor or information stored on or in the medium 1301 to be processed by the program. The medium may, for example, be a disk or flash memory. Typically, in operation, the processor causes data to be read from the nonvolatile recording medium 1301 into another memory 1302 that allows for faster access to the information by the processor than does the medium 1301. This memory 1302 is typically a volatile, random access memory such as a dynamic random access memory (DRAM) or static memory (SRAM). It may be located in storage system 1206, as shown, or in memory system 1204, not shown. The processor 1203 generally manipulates the data within the integrated circuit memory 1204, 1302 and then copies the data to the medium 1301 after processing is completed. A variety of mechanisms are known for managing data movement between the medium 1301 and the integrated circuit memory element 1204, 1302, and the invention is not limited thereto. The invention is not limited to a particular memory system 1204 or storage system 1206.

The computer system may include specially-programmed, special-purpose hardware, for example, an application-specific integrated circuit (ASIC). Aspects of the invention may be implemented in software, hardware or firmware, or any combination thereof. Further, such methods, acts, systems, system elements and components thereof may be implemented as part of the computer system described above or as an independent component.

Although computer system 1200 is shown by way of example as one type of computer system upon which various aspects of the invention may be practiced, it should be appreciated that aspects of the invention are not limited to being implemented on the computer system as shown in Fig. 12. Various aspects of the invention may be practiced on one or more computers having a different architecture or components that that shown in Fig. 12.

Computer system 1200 may be a general-purpose computer system that is programmable using a high-level computer programming language. Computer system 1200 may be also implemented using specially programmed, special purpose hardware. In computer system 1200, processor 1203 is typically a commercially available processor such as the well-known Pentium, Pentium, Core, Core Vpro, Xeon, or Itanium class processors available from the Intel Corporation. Many other processors are available. Such a processor usually executes an operating system which may be, for example, the Windows NT, Windows 2000 (Windows ME), Windows XP, Windows Vista or Windows 7 or 8 operating systems available from the Microsoft Corporation, MAC OS X Snow Leopard, MAC OS X Lion operating systems available from Apple Computer, the Solaris Operating System available from Sun Microsystems, iOS Blackberry OS, Windows 7 Mobile or Android OS operating system or UNIX available from various sources. Many other operating systems may be used.

The processor and operating system together define a computer platform for which application programs in high-level programming languages are written. It should be understood that the invention is not limited to a particular computer system platform, processor, operating system, or network. Also, it should be apparent to those skilled in the art that the present invention is not limited to a specific programming language or computer system. Further, it should be appreciated that other appropriate programming languages and other appropriate computer systems could also be used.

One or more portions of the computer system may be distributed across one or more computer systems (not shown) coupled to a communications network. These computer systems also may be general-purpose computer systems. For example, various aspects of the invention may be distributed among one or more computer systems configured to provide a service (e.g., servers) to one or more client computers, or to perform an overall task as part of a distributed system. For example, various aspects of the invention may be performed on a client-server system that includes components distributed among one or more server systems that perform various functions according to various embodiments of the invention. These components may be executable, intermediate (e.g., IL) or interpreted (e.g., Java) code which communicate over a communication network (e.g., the Internet) using a communication protocol (e.g., TCP/IP).

It should be appreciated that the invention is not limited to executing on any particular system or group of systems. Also, it should be appreciated that the invention is not limited to any particular distributed architecture, network, or communication protocol.

Various embodiments of the present invention may be programmed using an object-oriented programming language, such as SmallTalk, Java, C++, Ada, or C# (C-Sharp). Other object-oriented programming languages may also be used. Alternatively, functional, scripting, and/or logical programming languages may be used. Various aspects of the invention may be implemented in a non-programmed environment (e.g., documents created in HTML, XML or other format that, when viewed in a window of a browser program, render aspects of a graphical-user interface (GUI) or perform other functions). Various aspects of the invention may be implemented using various Internet technologies and other programming methods. Further, various aspects of the present invention may be implemented in a cloud-based computing platform, such as the well-known EC2 platform available commercially from Amazon.com, Seattle, WA, among others. Various aspects of the invention may be implemented as programmed or non-programmed elements, or any combination thereof.

Having thus described several aspects of at least one embodiment of this invention, it is to be appreciated various alterations, modifications, and improvements will readily occur to those skilled in the art. Such alterations, modifications, and improvements are intended to be part of this disclosure, and are intended to be within the scope of the invention. Accordingly, the foregoing description and drawings arc by way of example only.

**Claims**

**1.**   A method for presenting information to a user (101) in a computer system, the method comprising acts of:

   determining an identity of the user in the system;
   determining, for the user, the location of a mobile device (104; 204) of the user;
   periodically determining a context of the user;
   determining (709) whether the context has changed;
   responsive to determining that the context has changed, determining contextual content to display to the user, wherein determining contextual content comprises:

      determining at least one module from a plurality of modules based on the context of the user, wherein each module of the plurality of modules generates a specific type of content, and wherein each module is associated with a set of rules for determining when content from the respective module is relevant; and
      determining the contextual content from the at least one module based upon evaluation of the set of rules associated with the at least one module; and

   displaying the contextual content to the user in a display of the mobile device.

**2.**   The method according to claim 1, further comprising an act of determining movement of the mobile device of the user.

**3.**   The method according to claim 2, further comprising an act of determining whether there is a context change of the user responsive to movement of the mobile device of the user.

**4.**   The method according to claim 1, further comprising an act of ranking the respective contextual content of the plurality of modules.

**5.**   The method according to claim 4, further comprising an act of displaying the highest ranked contextual content to the user in the display of the mobile device.

**6.**   The method according to claim 5, wherein the act of displaying the highest ranked contextual content to the user in the display of the mobile device includes displaying the contextual content in at least one of a stream of content within a location-based service application (108; 206) and a notification pushed to the mobile device.

7. The method of claim 1, further comprising determining a semantically meaningful location of the mobile device, wherein determining a semantically meaningful location comprises:

   determining, for a plurality of mobile devices, a plurality of measured locations of the respective plurality of mobile devices;
   determining, based on user input, a plurality of mappings of semantically meaningful locations to respective measured locations of the plurality of mobile devices; and
   determining, in another measurement, a new measured location for the mobile device; and
   determining a semantically meaningful location of the mobile device based on the new measurement and a model based on the plurality of mappings of semantically meaningful locations to respective measured locations of the plurality of mobile devices.

8. The method according to claim 7, wherein the model based on the plurality of mappings of semantically meaningful locations to respective measured locations of the plurality of mobile devices includes information based on the time of the mappings, and wherein the act of determining the semantically meaningful location of the mobile device is responsive to a measured timestamp associated with the new measured location for the mobile device.

9. The method according to claim 7, wherein the model based on the plurality of mappings of semantically meaningful locations to respective measured locations of the plurality of mobile devices includes information based on a plurality of user identifications associated with each of the respective mappings, and wherein the act of determining the semantically meaningful location of the mobile device is responsive to a user identification of a user associated with the mobile device.

10. The method according to claim 7, further comprising an act of determining a context change of the mobile device responsive to the act of determining the semantically meaningful location of the mobile device based on the new measurement and a model based on the plurality of mappings of semantically meaningful locations to respective measured locations of the plurality of mobile devices.

**Patentansprüche**

1. Verfahren zum Darstellen von Informationen für einen Benutzer (101) in einem Computersystem, wobei das Verfahren die Vorgänge umfasst:

   Bestimmen einer Identität des Benutzers in dem System;
   Bestimmen für den Benutzer des Standortes einer mobilen Vorrichtung (104; 204) des Benutzers;
   periodisches Bestimmen eines Umfeldes des Benutzers;
   Bestimmen (709), ob sich das Umfeld geändert hat;
   in Reaktion auf das Bestimmen, dass sich das Umfeld geändert hat, Bestimmen von umfeldbezogenem Inhalt, um ihn dem Benutzer anzuzeigen, wobei das Bestimmen von umfeldbezogenem Inhalt umfasst:

      Bestimmen von wenigstens einem Modul aus einer Vielzahl von Modulen auf der Basis des Umfeldes des Benutzers, wobei jedes Modul aus der Vielzahl von Modulen eine spezifische Art von Inhalt erzeugt und wobei jedes Modul einem Regelwerk zum Bestimmen zugeordnet ist, wann ein Inhalt aus dem jeweiligen Modul relevant ist; und
      Bestimmen des umfeldbezogenen Inhalts anhand des wenigstens einen Moduls auf der Basis der Bewertung des Regelwerks, das dem wenigstens einen Modul zugeordnet ist; und

   Anzeigen des umfeldbezogenen Inhalts für den Benutzer in einer Anzeige der mobilen Vorrichtung.

2. Verfahren nach Anspruch 1, das des Weiteren einen Vorgang zum Bestimmen der Bewegung der mobilen Vorrichtung des Benutzers umfasst.

3. Verfahren nach Anspruch 2, das des Weiteren einen Vorgang zum Bestimmen umfasst, ob es eine Umfeldänderung des Benutzers in Reaktion auf die Bewegung der mobilen Vorrichtung des Benutzers gibt.

**4.** Verfahren nach Anspruch 1, das des Weiteren einen Vorgang zum Einstufen des jeweiligen umfeldbezogenen Inhalts aus der Vielzahl von Modulen umfasst.

**5.** Verfahren nach Anspruch 4, das des Weiteren einen Vorgang zum Anzeigen des am höchsten eingestuften umfeldbezogenen Inhalts für den Benutzer in der Anzeige der mobilen Vorrichtung umfasst.

**6.** Verfahren nach Anspruch 5, wobei der Vorgang zum Anzeigen des am höchsten eingestuften umfeldbezogenen Inhalts für den Benutzer in der Anzeige der mobilen Vorrichtung das Anzeigen des umfeldbezogenen Inhalts in wenigstens einem Inhaltsstrom in einer standortbasierten Dienstanwendung (108; 206) oder einer Benachrichtigung aufweist, die zur mobilen Vorrichtung übertragen wird.

**7.** Verfahren nach Anspruch 1, das des Weiteren das Bestimmen eines semantisch bedeutsamen Standortes der mobilen Vorrichtung umfasst, wobei das Bestimmen eines semantisch bedeutsamen Standortes umfasst:

Bestimmen für eine Vielzahl von mobilen Vorrichtungen einer Vielzahl von gemessenen Standorten der jeweiligen Vielzahl von mobilen Vorrichtungen;
Bestimmen auf der Basis einer Benutzereingabe einer Vielzahl von Zuordnungen von semantisch bedeutsamen Standorten zu jeweiligen gemessenen Standorten der Vielzahl von mobilen Vorrichtungen und
Bestimmen in einer weiteren Messung eines neu gemessenen Standortes für die mobile Vorrichtung und
Bestimmen eines semantisch bedeutsamen Standortes der mobilen Vorrichtung auf der Basis der neuen Messung und eines Modells auf der Basis der Vielzahl von Zuordnungen von semantisch bedeutsamen Standorten zu jeweiligen gemessenen Standorten der Vielzahl von mobilen Vorrichtungen.

**8.** Verfahren nach Anspruch 7, wobei das Modell auf der Basis der Vielzahl von Zuordnungen von semantisch bedeutsamen Standorten zu jeweiligen gemessenen Standorten der Vielzahl von mobilen Vorrichtungen Informationen auf der Basis des Zeitpunktes der Zuordnungen aufweist und wobei der Vorgang zum Bestimmen des semantisch bedeutsamen Standortes der mobilen Vorrichtung in Reaktion auf einen gemessenen Zeitstempel durchgeführt wird, der dem neu gemessenen Standort für die mobile Vorrichtung zugeordnet ist.

**9.** Verfahren nach Anspruch 7, wobei das Modell auf der Basis der Vielzahl von Zuordnungen von semantisch bedeutsamen Standorten zu jeweiligen gemessenen Standorten der Vielzahl von mobilen Vorrichtungen Informationen auf der Basis einer Vielzahl von Benutzeridentifikationen aufweist, die jeder der jeweiligen Zuordnungen zugeordnet sind, und wobei der Vorgang zum Bestimmen des semantisch bedeutsamen Standortes der mobilen Vorrichtung in Reaktion auf eine Benutzeridentifikation eines der mobilen Vorrichtung zugeordneten Benutzers durchgeführt wird.

**10.** Verfahren nach Anspruch 7, das des Weiteren einen Vorgang zum Bestimmen einer Umfeldänderung der mobilen Vorrichtung in Reaktion auf den Vorgang zum Bestimmen des semantisch bedeutsamen Standortes der mobilen Vorrichtung auf der Basis der neuen Messung und eines Modells auf der Basis der Vielzahl von Zuordnungen von semantisch bedeutsamen Standorten zu jeweiligen gemessenen Standorten der Vielzahl von mobilen Vorrichtungen umfasst.

**Revendications**

**1.** Procédé de présentation d'informations à un utilisateur (101) dans un système informatique, le procédé comportant les opérations suivantes:

déterminer une identité de l'utilisateur dans le système;
déterminer, pour l'utilisateur, l'emplacement d'un dispositif mobile (104; 204) de l'utilisateur;
déterminer périodiquement un contexte de l'utilisateur;
déterminer (709) si le contexte a changé;
en réponse à la détermination que le contexte a changé, déterminer le contenu contextuel à afficher à l'utilisateur, la détermination du contenu contextuel comprenant les opérations suivantes:

déterminer au moins un module parmi une pluralité de modules en fonction du contexte de l'utilisateur, chaque module de la pluralité de modules générant un type de contenu spécifique, et chaque module étant associé à un ensemble de règles permettant de déterminer quand le contenu du module correspondant est pertinent; et

**24**

déterminer le contenu contextuel à partir dudit au moins un module sur la base de l'évaluation de l'ensemble de règles associées audit au moins un module; et

afficher le contenu contextuel à l'utilisateur dans un affichage du dispositif mobile.

2. Procédé selon la revendication 1, comprenant en outre une opération consistant à déterminer le mouvement du dispositif mobile de l'utilisateur.

3. Procédé selon la revendication 2, comprenant en outre une opération consistant à déterminer la présence d'un changement de contexte de l'utilisateur en réponse au mouvement du dispositif mobile de l'utilisateur.

4. Procédé selon la revendication 1, comprenant en outre une opération de classement du contenu contextuel de la pluralité de modules.

5. Procédé selon la revendication 4, comprenant en outre l'opération consistant à afficher le contenu contextuel classé en premier à l'utilisateur dans l'affichage du dispositif mobile.

6. Procédé selon la revendication 5, dans lequel l'opération consistant à afficher le contenu contextuel classé en premier à l'utilisateur à l'affichage du dispositif mobile comprend l'affichage du contenu contextuel dans au moins un flux de contenu dans une application de service fond sur la localisation (108; 206) ou bien une notification transmise au dispositif mobile.

7. Procédé selon la revendication 1, comprenant en outre la détermination d'un emplacement sémantiquement significatif du dispositif mobile, dans lequel la détermination d'un emplacement sémantiquement significatif comprend les opérations suivantes:

déterminer, pour une pluralité de dispositifs mobiles, une pluralité d'emplacements mesurés de la pluralité respective de dispositifs mobiles;
déterminer, sur la base d'une entrée d'utilisateur, une pluralité de mappages d'emplacement sémantiquement significatifs sur des emplacements mesurés respectifs de la pluralité de dispositifs mobiles; et
déterminer, dans une autre mesure, un nouvel emplacement mesuré pour le dispositif mobile; et
déterminer un emplacement sémantiquement significatif du dispositif mobile sur la base de la nouvelle mesure et d'un modèle fondé sur la pluralité de mappages d'emplacement sémantiquement significatifs sur des emplacements mesurés respectifs de la pluralité de dispositifs mobiles.

8. Procédé selon la revendication 7, dans lequel le modèle fondé sur la pluralité de mappages des emplacements sémantiquement significatifs vers les emplacements mesurés respectifs de la pluralité des dispositifs mobiles incluent des informations fondées sur l'heure des mappages et dans lesquelles l'opération consistant à déterminer l'emplacement sémantiquement significatif de l'appareil mobile vient en réaction à un horodatage mesuré associé au nouvel emplacement mesuré pour le dispositif mobile.

9. Procédé selon la revendication 7, dans lequel le modèle fondé sur la pluralité de mappages des emplacements sémantiquement significatifs vers les emplacements mesurés respectifs de la pluralité des dispositifs mobiles incluent des informations fondées sur une pluralité d'identifications utilisateur associés à chacun des mappages respectifs et dans lesquelles l'opération consistant à déterminer l'emplacement sémantiquement significatif du dispositif mobile vient en réaction à une identification utilisateur d'un utilisateur associé au dispositif mobile.

10. Procédé selon la revendication 7, comprenant en outre une opération consistant à déterminer un changement de contexte du dispositif mobile en réponse à l'opération consistant à déterminer l'emplacement sémantiquement significatif du dispositif mobile fondé sur la nouvelle mesure et un modèle fondé sur la pluralité de mappages d'emplacements sémantiquement significatifs à des emplacements respectifs mesurés de la pluralité de dispositifs mobiles.

**FIG. 1**

Applications
*108*

User
*101*

Location–
Aware Devices
*104*

*102*

Location–Based
Service

*103*

User–Based
Information

*104*

*106*

Web
Server

*105*

Venue
Information

*107*

Services

Database

EP 3 036 929 B1

**FIG. 2**

Process
**300**

Begin — *301*

Permit Merchant
to Define Message — *302*

User Performs
Activity in Location–
Based System — *303*

User Identified to
Receive Messages
from Merchant — *304*

Is User Located
Proximate to Message
Delivery Area? — *305*

No

Yes

Deliver Message
to User — *306*

# FIG. 3A

Process
310

Begin — 311

Permit Merchant
to Define Message — 312

User Performs
Activity in Location-
Based System — 313

User Identified to
Receive Messages
from Merchant — 314

Did User Satisfy
Location-Based Network Criteria
for Message Delivery? — 315

No

Yes

Deliver Message
to User — 316

FIG. 3B

Process
*320*

*321*

Query lat, lng,
timestamp, userid → **Retrieval** *322* → **Ranking** *323* → Response
List of Ranked Venues *328*

Spatial
Index
*324*

Ranking
Model
*325*

**Optimization** *326*

Results, Features,
Clicks, and Check-ins *329*

**Modeling** *327* ← **Logging** *330*

*FIG. 3C*

*FIG. 4*

|  | Tourist | Familiar | Local |  |
|---|---|---|---|---|
| Just Arrived | 4.5% | 3.4% | 2.1% | |
| Already Here | 1.0% | 1.1% | 0.2% | |

New + Notable
Trending
Sights

## FIG. 5

Process
**600**

**601**

Begin

**602**

Determine Location, Speed,
Acceleration of Mobile Device

**603**

Determine if Location
Change significant

**604**

Significant
?

No → **607**

Delay/
Sleep

Yes

**605**

Determine Content

**606**

Issue Notifications

*FIG. 6*

FIG. 7

EP 3 036 929 B1

FIG. 8

900

Little Fox recently opened

| 7.1 | Cafe .8 mi △ 1

901

# FIG. 9

1000

Time for lunch? Check out recommendations nearby ( Tin Vietnamese. Super Duper Burger & 10 more )

# FIG. 10

**1100**

ONE TAB/INTERFACE

TOP PICKS
Radar Landing page

TARGET PAGES
The pages that show
the full set of
relevant nearby data

**1101**

| | | |
|---|---|---|
| Venue Detail | David Murray @ The Scratcher<br>Alex Reinert @ Heche en Dumbo<br>Daniel S @ The Smile<br>and 3 more | David Murray @ The Scratcher<br>Alex Reinert @ Heche en Dumbo<br>Daniel S @ The Smile<br>and 3 more | FRIEND NEARBY |
| | The Scratcher is trending!<br>DIVE BAR (25) 0.4 mi | Louise M. David Symphony Hall(30). The<br>Scratcher(4) and Heche en Dumbo(50)<br>are trending | TRENDING ENDPOINT |
| List Detail | The List "Places that feel like secrets"<br>features 5 places nearby | 'Places that feel like secrets' and 'Date Nights,<br>You're Welcome' and 4 more lists feature places<br>nearby | SUGGESTED LISTS |
| Tip Detail | Siobhan Q left a tip at<br>Grand Central Station<br>"Since the renovations here, the<br>pharmacy has moved downstairs..."<br>CATEGORY (40) 0.4mi | Siobhan Q and Alex R. have lefts tips nearby at<br>Grand Central Oyster Bar and Grays Popeye.<br>"Since the renovations here, the pharmacy<br>has moved downstairs..." | NEARBY TIPS FROM FIRENDS |
| | more all nearby | | |

**1103**  **1102**

*FIG. 11*

EP 3 036 929 B1

*1200*

*1203*
Processor

*1202*
Input Device

*1205*
Interconnection Mechanism

*1201*
Output Device

*1204*
Memory

*1206*
Storage

# FIG. 12

1301

1302

110101

Storage Memory
System

1
1
0
1
0
1

To
Processor

FIG. 13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2007006098 A1
- US 2006236258 A1
- EP 2613501 A1
- US 2011276565 A1